(19) Europäisches Patentamt / European Patent Office / Office européen des brevets

(11) **EP 3 802 018 B1**

(12) **FASCICULE DE BREVET EUROPEEN**

(45) Date de publication et mention de la délivrance du brevet:
**22.01.2025 Bulletin 2025/04**

(21) Numéro de dépôt: **18728880.8**

(22) Date de dépôt: **01.06.2018**

(51) Classification Internationale des Brevets (IPC):
**B25J 15/06** (2006.01)    **B06B 1/00** (2006.01)

(52) Classification Coopérative des Brevets (CPC):
**B25J 15/0616; B06B 1/00**

(86) Numéro de dépôt international:
**PCT/EP2018/064463**

(87) Numéro de publication internationale:
**WO 2019/228641 (05.12.2019 Gazette 2019/49)**

(54) **DISPOSITIF POUR MANIPULATION D'OBJET SANS CONTACT**

VORRICHTUNG ZUR BERÜHRUNGSLOSEN OBJEKTHANDHABUNG

DEVICE FOR NON-CONTACT OBJECT HANDLING

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(43) Date de publication de la demande:
**14.04.2021 Bulletin 2021/15**

(73) Titulaire: **Touchless Development GmbH**
**2504 Biel/Bienne (CH)**

(72) Inventeurs:
• DEPETRIS, Fabio
2502 Biel/Bienne (CH)
• SABATO, Mike
2562 Port (CH)

(74) Mandataire: **Stellbrink & Partner Patentanwälte mbB**
**Widenmayerstrasse 10**
**80538 München (DE)**

(56) Documents cités:
DE-A1- 102008 036 805    JP-A- 2006 073 654
JP-A- 2016 063 168    US-A1- 2004 070 221
US-A1- 2015 088 154

• JIN LI ET AL: "Design optimization and experimental study of acoustic transducer in Near Field Acoustic Levitation", ROBOTICS AND AUTOMATION (ICRA), 2011 IEEE INTERNATIONAL CONFERENCE ON, IEEE, 9 May 2011 (2011-05-09), pages 4353 - 4358, XP032033517, ISBN: 978-1-61284-386-5, DOI: 10.1109/ICRA.2011.5979642
• GUNTHER REINHART ET AL: "Non-contact handling and transportation for substrates and microassembly using ultrasound-air-film-technology", ADVANCED SEMICONDUCTOR MANUFACTURING CONFERENCE (ASMC), 2011 22ND ANNUAL IEEE/SEMI, IEEE, 16 May 2011 (2011-05-16), pages 1 - 6, XP031996961, ISBN: 978-1-61284-408-4, DOI: 10.1109/ASMC.2011.5898208

**Description**

**Domaine technique**

La présente invention concerne un dispositif pour manipuler un objet sans contact et une méthode pour manipuler un objet sans contact. L'invention concerne plus particulièrement un dispositif pour la manutention d'objets de petite taille, notamment inférieure à un volume de l'ordre de $10^{-6}m^3$ ou inférieure à une masse de l'ordre de 20gm.

**Etat de la technique**

Les procédés dits « pick and place » permettent de manipuler un objet en utilisant des outils qui effectuent des manipulations à des cadences extrêmement rapides pour déplacer plusieurs centaines d'objets par minute. Les outils « pick and place » emploient généralement des dispositifs de succion, dits « vacuum gripper », pour aspirer l'objet dans une direction opposée à la pesanteur, immobiliser l'objet contre l'outil et ainsi le déplacer à l'endroit voulu. Lorsqu'il s'agit de manipuler des objets de l'ordre du centimètre, le but est d'agripper l'objet en luttant contre les effets de la pesanteur. Pour cette gamme d'objet, la pesanteur est la principale force qui s'exerce sur l'objet, la pesanteur étant notamment bien supérieure aux forces d'adhésion entre l'outil et l'objet.

Cependant, lorsque la taille de l'objet diminue, typiquement en dessous de $10^{-6}m^3$, la pesanteur qui s'exerce sur l'objet est très faible et il est facile d'aspirer l'objet. En revanche, les forces d'adhésion, qui étaient négligeables pour des objets plus grands, deviennent majoritaires et sont bien supérieures à la pesanteur. Ainsi, lorsque l'objet est plaqué contre l'outil, il est difficile de détacher l'objet de l'outil à cause des forces d'adhésion entre l'objet et l'outil, ce qui perturbe la vitesse de déplacement et la précision du positionnement de l'objet déplacé. De plus, à cette échelle, chaque contact entre l'objet et la tête de succion risque d'endommager l'objet en générant des microparticules qui peuvent également perturber le fonctionnement de l'outil. Ainsi, les dispositifs de succion ne sont pas satisfaisants pour manipuler des objets de petite taille ou des objets fragiles.

Pour contrecarrer les inconvénients des dispositifs de succion, il existe des méthodes sans contact, où l'objet à déplacer lévite au-dessus ou en-dessous de l'outil.

On connait la lévitation optique qui permet d'accélérer et de suspendre une particule jusqu'à $10^{-12}m^3$ en appliquant une pression de radiation, par exemple par un rayonnement laser. Cependant, ce type de manipulation doit se faire dans un environnement transparent pour optimiser la stabilité de la particule, la particule étant obligatoirement diélectrique transparente. Il existe aussi la lévitation électrique qui utilise un champ électrique pour contrer la pesanteur et manipuler un objet chargé ou polarisé. On peut remplacer le champ électrique par un champ magnétique pour manipuler des objets en fonction de leurs propriétés magnétiques. Cependant, ces deux types de lévitation ne sont applicables qu'aux objets sensibles aux champs électriques ou magnétiques. De plus, il y a un risque de dégradation de l'objet placé dans un champ magnétique ou électrique. Enfin, ces techniques nécessitent des installations spécifiques en fonction de l'objet à manipuler.

La lévitation aérodynamique utilise un flux de gaz, généralement de l'air, pour faire léviter un objet. Dans ce type de lévitation, on distingue les paliers à air des dispositifs de Bernoulli. Les paliers à air expulsent un flux d'air depuis le dessous de l'objet pour le faire léviter. A l'inverse, les dispositifs de Bernoulli sont positionnés au-dessus de l'objet à manipuler. Dans les dispositifs Bernoulli, l'outil comprend des parois latérales, l'objet à manipuler étant positionné entre ces parois. L'outil comprend un canal qui expulse de l'air comprimé sur l'objet. L'air comprimé projeté sur l'objet est évacué par l'espace qui existe entre les parois et l'objet, ce qui génère une force attractive opposé à la direction de l'air comprimé, cet effet étant appelé l'effet Bernoulli. La force attractive permet de maintenir l'objet à distance de l'outil. Le principal désavantage des méthodes aérodynamiques est que l'objet qui lévite a très peu de stabilité latérale.

Des méthodes de lévitation utilisant les ultrasons sont aussi connues. On distingue les méthodes utilisant la lévitation des ondes stationnaires ou lévitation champ lointain (« far field leviation » ou « standing wave lévitation ») des méthodes utilisant les champs proches (« near field levitation »). La transition entre le champ proche et le champ lointain a lieu au niveau d'un point F appelé focus naturel. Le focus naturel F est une distance par rapport à la surface du générateur de l'onde ultrason : avant F, on parle de champ proche, après F, on parle de champ lointain. Autrement dit, si un objet est en lévitation dans un champ proche, on parle de lévitation en champs proche, s'il est en lévitation après le point F, on dit que l'objet est en lévitation en champ lointain. F est défini par :

$$F = r^2/\lambda$$

où r est le rayon de la surface de la partie du générateur opposée à l'objet et $\lambda$ la longueur d'onde de l'ultrason.

Les systèmes utilisant la lévitation d'onde stationnaire nécessitent la présence d'un réflecteur qui fait face au générateur d'ultrason. Le générateur émet des ondes qui vont se réfléchir sur le réflecteur et créer des noeuds équidistants de $\lambda/2$ où la force de répulsion est suffisante pour qu'un objet puisse léviter. Le principal inconvénient de cette technique est que les manipulations sont limitées à la zone entre le générateur et le réflecteur, et ceux uniquement au niveau des noeuds. De plus, l'objet est maintenu obligatoirement à une distance minimale du générateur de $\lambda/2$ qui est la distance du premier noeud.

Dans certaines méthodes utilisant les ultrasons de champs proches, il n'y a pas de réflecteur au regard de l'émetteur, c'est l'objet à léviter qui agit comme un réflecteur. Cette méthode est peu utilisée car son champ d'application est limité à un déplacement vertical de l'objet, de bas en haut, en plaçant un émetteur en dessous de l'objet ce qui restreint son champ d'application.

Des méthodes de lévitation utilisant une combinaison d'ultrasons et d'aspiration d'air sont aussi connues, et décrites par exemple dans les documents "Non-contact Handling and Transportation for Substrates and Microassembly Using Ultrasound-Air-Film-Technology", IEEE 2011, US2004/0070221, DE102008036805, et JP2006-073654. Dans ces dispositifs de l'art antérieur, on couple une sonotrode intégrant le canal d'aspiration, à un transducteur, la sonotrode correspondant au moins à une demi-longueur d'onde, parfois plus, s'ajoutant à la longueur du transducteur correspondant au moins à une demi-longueur d'onde. Les outils de l'art antérieur ont une longueur entre extrémités d'au moins une longueur d'onde des ultrasons générés dans le corps de l'outil. L'encombrement de tels outils pour des applications de saisie-placement ou d'autres applications de manutention d'objets dans des espaces contraignantes, est un inconvénient et parfois rend l'utilisation de tels outils impossible pour certaines applications. Par ailleurs, une masse accrue de l'outil peut aussi influencer négativement la performance (rapidité et précision) des machines robots portant ces outils.

En pratique des outils conventionnels de lévitation utilisant une combinaison d'ultrasons et d'aspiration d'air poserait des problèmes de stabilité dans la saisie et le placement d'objets millimétriques ou micrométriques en raison de l'amplitude relativement élevé des forces de répulsion et de succion au point d'équilibre se trouvant à une distance très proche de l'objet. Les difficultés sont accrues lors de la saisie de l'objet d'une surface par l'outil, et aussi lors du relâchement de l'objet à sa position cible à cause de l'influence de la surface sur laquelle l'objet est posé sur le flux d'air et la pression. Il peut aussi y avoir des forces électrostatiques non-négligeables à vaincre pour des petits objets.

## Bref résumé de l'invention

Un but de la présente invention est de proposer un système pour manipuler un objet sans contact, en particulier un objet millimétrique ou micrométrique, exempt des limitations ou minimisant les limitations des dispositifs connus.

Des buts de l'invention sont réalisés par un outil selon la revendication 1, un système selon la revendication 8, et un procédé selon la revendication 12.

Dans la présente, on décrit un outil de manutention pour saisir un objet sans contact, l'outil comprenant un transducteur d'ultrasons configuré pour émettre des ultrasons formant, dans une zone en champ proche d'une face de saisie du transducteur, une onde de surpression, et un système d'aspiration de fluides configuré pour aspirer un fluide vers la face de saisie, formant dans ladite zone en champ proche une sous pression.

Selon l'invention, le transducteur d'ultrasons est configuré pour opérer à une fréquence correspondant à la première fréquence harmonique résonante du transducteur ou à une fréquence forcée anti-résonante proche de la première fréquence harmonique.

Dans une forme d'exécution avantageuse, le transducteur d'ultrasons s'étend entre une face réflectrice et la face de saisie, une hauteur du transducteur définie par une distance entre la face de saisie et la face réflectrice étant située dans une gamme de 80% à 150% d'une demi-longueur d'onde $\lambda/2$ des ultrasons générés dans le transducteur.

Dans une forme d'exécution avantageuse, le système d'aspiration de fluides comprend au moins un canal d'aspiration de fluides disposé dans le transducteur d'ultrasons.

Dans une forme d'exécution avantageuse, le transducteur d'ultrasons comporte un corps et une tête, disposée à une extrémité du corps opposée à la face réflectrice, la tête comprenant la face de saisie et étant séparable du corps, ledit au moins un canal d'aspiration traversant le corps et la tête.

Dans une forme d'exécution avantageuse, le générateur d'ultrason comprend au moins une paire d'éléments piézoélectriques superposés, de préférence piézocéramique, ladite paire étant vissée dans le corps par une vis, le canal d'aspiration traversant la vis.

Dans une forme d'exécution avantageuse, ladite hauteur du transducteur est située dans une gamme de 90% à 110% d'une demi-longueur d'onde $\lambda/2$ des ultrasons générés dans le transducteur.

Dans une forme d'exécution avantageuse, ladite hauteur du transducteur est inférieure à 100mm, de préférence inférieure à 90mm, par exemple dans une gamme allant de 90mm à 20mm.

Dans une forme d'exécution avantageuse, le canal d'aspiration comprend une ou plusieurs buse(s) d'aspiration débouchant sur la face de saisie. Dans une variante, le canal d'aspiration comprend une seule buse d'aspiration débouchant sur la face de saisie, ladite buse d'aspiration étant centrée sur la face de saisie. Dans une autre variante, le canal d'aspiration comprend plusieurs buses d'aspiration débouchant sur la face de saisie.

Dans une forme d'exécution avantageuse, ledit au moins un canal d'aspiration traverse l'outil de manutention de la face de saisie à la face réflective.

Dans une forme d'exécution avantageuse, le transducteur d'ultrasons comprend un générateur d'ultrasons et un dispositif de transmission des ultrasons couplé au générateur, le dispositif de transmission comprenant un corps frontal muni d'un élément de fixation de l'outil disposé au niveau d'un première plan nodal des ondes ultrasoniques générées dans le transducteur à une fréquence correspondant à la première fréquence harmonique résonante du transducteur ou à une fréquence forcée anti-résonante proche de la première fréquence harmonique.

Dans une forme d'exécution avantageuse, le transducteur d'ultrasons comprend une tête couplé de manière interchangeable à un corps frontal du dispositif de transmission par un dispositif de fixation, la face de saisie étant disposée sur la tête, un deuxième plan nodal des ondes ultrasoniques générées dans le transducteur à une fréquence correspondant à la première fréquence harmonique résonante du transducteur ou à une fréquence forcée anti-résonante proche de la première fréquence harmonique étant situé au niveau dudit dispositif de fixation.

Dans une forme d'exécution avantageuse, le dispositif de transmission comprend un corps arrière et un organe de précontrainte, le générateur d'ultrasons étant comprimé entre le corps frontal et le corps arrière par l'organe de précontrainte. L'organe de précontrainte peut notamment être une vis, et dans une forme d'exécution avantageuse, le canal d'aspiration traverse la vis.

Selon un mode de réalisation, le générateur d'ultrasons peut comprendre un empilement d'une pluralité d'anneaux piézoélectriques. Selon une forme d'exécution il y a 2 anneaux piézoélectriques. Selon des variantes il y a 4 ou 6 anneaux piézoélectriques.

Dans une forme d'exécution avantageuse, le transducteur d'ultrasons comprend une tête couplée de manière interchangeable à un corps frontal du dispositif de transmission, la face de saisie étant disposée sur la tête. L'outil peut comprendre un jeu de plusieurs têtes interchangeables de dimensions ou de formes différentes.

Dans une forme d'exécution avantageuse, la tête et le corps frontal comprend des éléments de fixation complémentaires sous forme d'un système de fixation à baïonnette ou à vis.

Selon des modes de réalisation, la face de saisie peut être plane ou courbe, par exemple ayant une forme concave, configurée pour être conforme à une portion de la surface de l'objet à saisir. Selon des modes de réalisation, la face de saisie peut comprendre une surface hydrophobe ou lipophobe, notamment pour des applications de saisie d'objets liquides.

Dans une forme d'exécution avantageuse, l'outil peut comprendre en outre un dispositif de décharge électrique pour neutraliser une charge électrique de l'objet.

La surface de la face de saisie dans le cadre de l'invention peut être dans une gamme de 0.1 à 1300 mm$^2$.

Dans une forme d'exécution avantageuse, la face de saisie de l'outil a une surface de taille identique, ou dans une gamme de 90% à 110%, à la taille d'une surface de l'objet à saisir.

Dans une forme d'exécution avantageuse, le corps frontal comprend au moins deux réductions de diamètre successives D1, D2, D3 dans le sens du générateur d'ultrasons vers la face de saisie, les rapports entre les diamètres successives D1, D2, D3 dans ledit sens se trouvant dans une gamme :

- pour D1/D2, entre max 2,6 et min 1,1
- pour D2/D3, entre max 6 et min 1,1

et pour toute réduction supplémentaire entre max entre max 6 et min 1,1.

Dans la présente, on décrit aussi un système de manutention sans contact comprenant l'outil de manutention sans contact, une unité de commande connectée au générateur d'ultrasons du transducteur d'ultrasons, et un dispositif d'aspiration comprenant une pompe d'aspiration connectée à un canal d'aspiration de fluides. L'unité de commande et le transducteur d'ultrasons sont configurés pour générer des ultrasons dans le transducteur à une fréquence correspondant à la première fréquence harmonique résonante du transducteur ou à une fréquence forcée anti-résonante proche de la première fréquence harmonique.

Dans une forme d'exécution avantageuse, l'unité de commande et le transducteur d'ultrasons sont configurés pour générer des ultrasons à une fréquence se trouvant dans une gamme de 20kHz à 350kHz en fonction de la taille de l'objet à manipuler.

Dans une forme d'exécution avantageuse, l'unité de commande et le transducteur d'ultrasons sont configurés pour générer des ultrasons à une fréquence se trouvant dans une gamme de 30kHz à 350kHz, et notamment dans une gamme de 40kHz à 300kHz.

Dans une forme d'exécution avantageuse, l'unité de commande comprend un circuit de commande connectée au générateur d'ultrasons et à la pompe d'aspiration pour commander simultanément la puissance d'aspiration et la génération des ultrasons.

Dans une forme d'exécution avantageuse, le dispositif d'aspiration comprend une électrovanne et un capteur de pression reliés à l'unité de commande, l'électrovanne étant régulée par la pression mesurée par le capteur de pression afin de réguler la distance de suspension ds de l'objet par rapport à la face de saisie.

Dans une forme d'exécution avantageuse, le système comprend un stabilisateur de pression couplé fluidiquement au canal d'aspiration pour détecter un dépassement d'un seuil de sous-pression afin d'éviter une succion de matière étrangère provenant de l'objet dans des buses ou dans le canal d'aspiration.

Dans une forme d'exécution avantageuse, le stabilisateur de pression comprend ou est constitué par un orifice résistif qui est configuré pour fournir une résistance au flux d'air plus grand que le canal d'aspiration. Notamment, la résistance au flux d'air est au moins deux fois plus grand que la résistance au flux d'air généré par le canal d'aspiration conjointement avec la (les) buse(s). De préférence, la résistance au flux d'air est au moins trois fois plus grand, voire au moins quatre fois plus grand que la résistance au flux d'air généré par le canal d'aspiration conjointement avec la (les) buse(s).

Dans une forme d'exécution avantageuse, le système comprend un capteur de flux mesurant le flux d'air dans le canal d'aspiration reliant l'outil à la pompe d'aspiration, le détecteur de flux configuré pour détecter le contact de l'objet avec la face de saisie, ou pour détecter un flux trop élevé indiquant que l'objet n'est plus en prise avec l'outil.

Dans la présente, on décrit aussi un procédé de manutention d'un objet sans contact tel que défini dans la revendication 12.

Dans une forme d'exécution avantageuse, la distance de suspension de l'objet par rapport à la face de saisie est entre 1 et 80 micromètres, de préférence entre 1 et 60 micromètres.

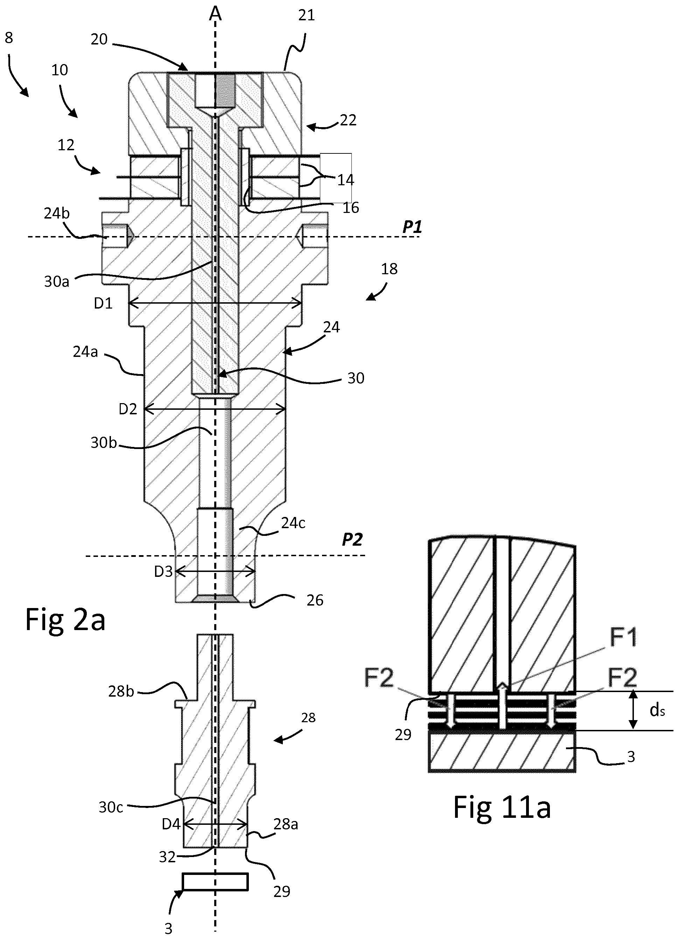

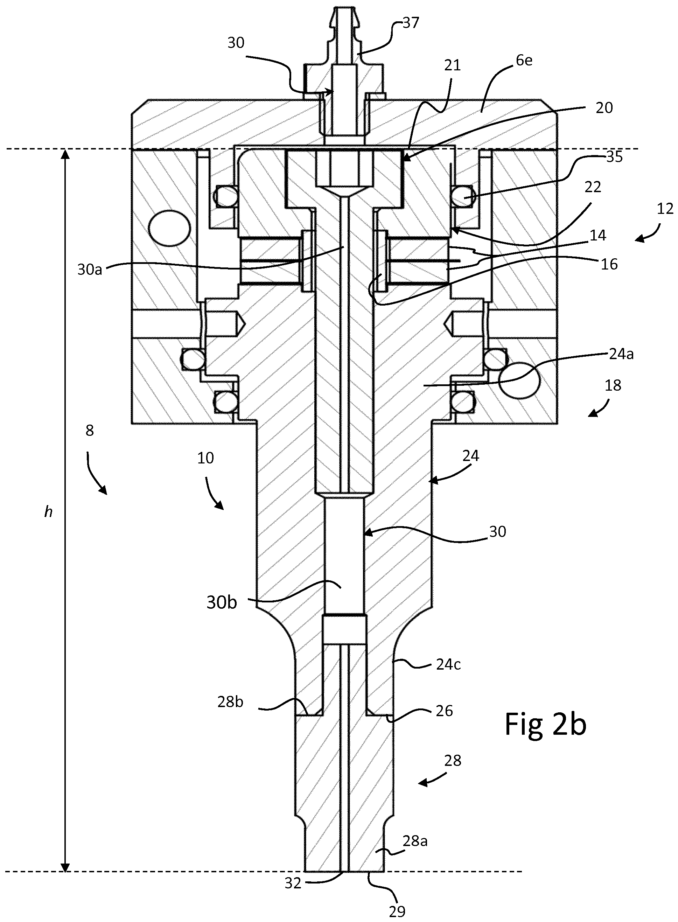

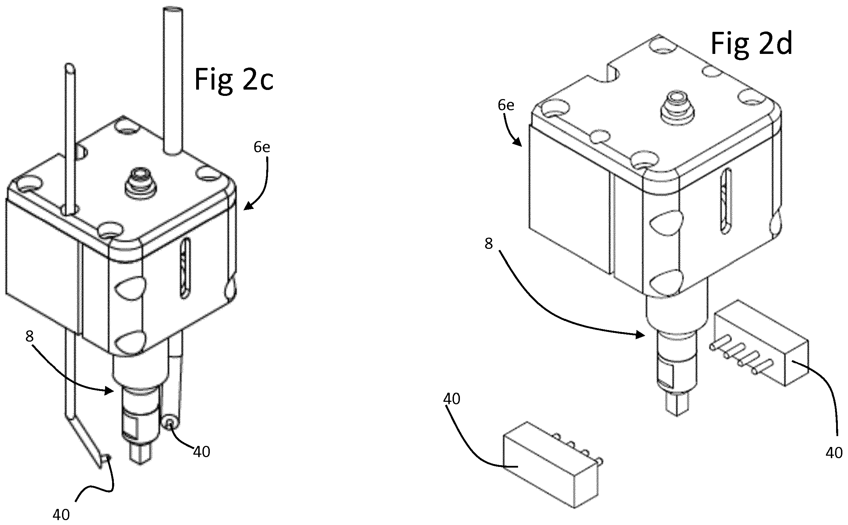

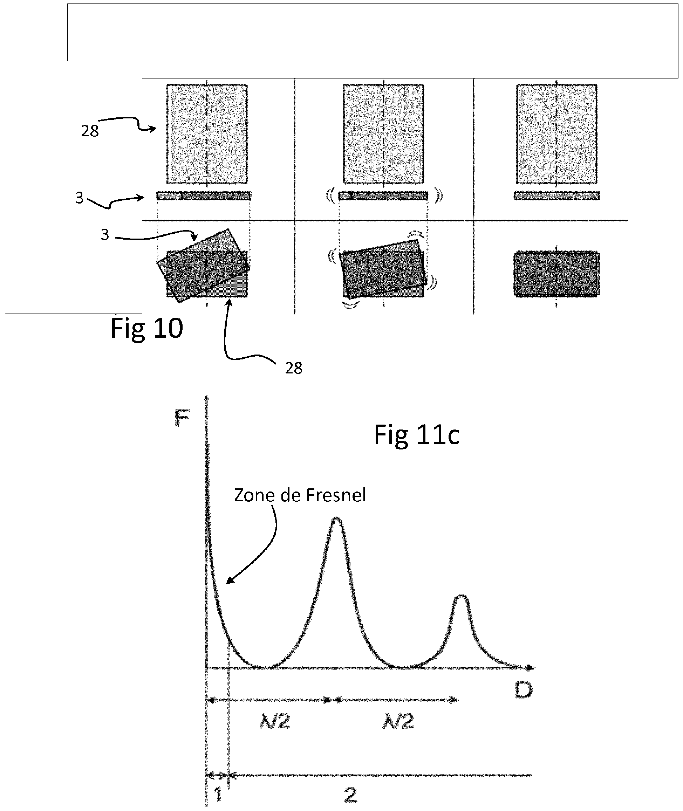

Le dispositif selon la présente invention utilise des ultrasons de champ proche comme force répulsive. En effet, la force répulsive des ultrasons varie dans la zone de Fresnel de façon à suivre la relation $1/(x^2)$ en fonction de la distance $x$ avec la tête, comme illustré sur la figure 11c. Ce graphique illustre que la force est maximum au plus proche de la tête, c'est-à-dire au niveau des ultrasons de champs proche (zone 1 sur la figure 2), puis diminue dans les ondes stationnaires (zone 2 sur la figure 2). La force de répulsion en champs proche est toujours supérieure à la force mesurée aux noeuds séparés par $\lambda/2$ dans la zone de lévitation des ondes stationnaires. Ainsi, l'utilisation des ultrasons de champ proche permet d'utiliser une force répulsive maximale sur l'objet, qui est contrebalancée par une force attractive de même ordre, ce permet d'obtenir une force de lévitation maximale sur l'objet. Cela permet d'améliorer la stabilité de l'objet pendant la suspension de l'objet.

Dans un mode de réalisation, le générateur d'ultrasons génère des ultrasons à une fréquence entre 20 kHz et 500 kHz, de préférence entre 40 kHz et 300 kHz en fonction de la taille de l'objet à saisir. La fréquence dépend des dimensions de l'objet à manipuler. Plus l'objet est petit, plus la fréquence peut être grande, et vice versa.

Dans un mode de réalisation, la tête a un diamètre d'environ trois fois le diamètre de l'objet.

Dans un mode de réalisation, la hauteur h de l'ensemble corps-tête est inférieure à huit fois, par exemple environ six fois, le diamètre de l'enveloppe de l'objet. Par exemple, pour manipuler un objet d'environ 3 mm de diamètre, la longueur de l'ensemble corps-tête est d'environ 20 mm et le diamètre maximal de la tête est d'environ 8mm.

Le terme diamètre a une définition large pour désigner la plus grande dimension de l'objet (son enveloppe) disposé en regard de la face de saisie de la tête, et s'applique ici aussi aux têtes ou aux objets non circulaires dans ce plan.

Avantageusement, il est possible de miniaturiser le dispositif du système de manutention pour adapter les dimensions du corps et de la tête en fonction de l'objet à manipuler.

L'invention fonctionne aussi bien avec des objets présentant une surface plane ou une surface sphérique ou présentant des ouvertures. En particulier, les meilleurs résultats de centrage ou d'alignement sont obtenus lorsque la surface de l'objet en regard à la face de saisie est une surface continue, sans trou ou ouverture.

L'objet n'a pas de restriction de taille ou de forme, il peut être plan, sphérique, ou comporter des cotés concaves, ou convexes, ou des ouvertures. L'objet peut être un objet solide qui peut être constitué de tous types de matériaux. Par exemple, les matériaux sont choisis parmi le métal ou un alliage de métaux, la céramique, les polyoléfines, les polyamides, des résines par exemple époxy, du verre, du silicium, les polymères plastiques.

Par exemple, l'objet est choisi parmi les composants électroniques comme des semi-conducteurs, des microsystèmes de type MEMS ou MOEMS, des biopuces, des transistors en couches minces, des chips ou d'autres composants électroniques. L'objet peut avoir un revêtement en verre, un revêtement usiné au préalable qui présente des creux ou reliefs. L'objet peut être une pièce d'horlogerie, comme les pièces qui composent un mouvement. L'objet peut être un composant utilisé pour fabriquer des dispositifs médicaux dans les technologies médicales ou pharmaceutiques. L'objet peut être un composant utilisé pour fabriquer des composés pour l'aérospatial.

L'objet est choisi parmi les objets déplacés par micromanipulation, manipulation des objets fragiles, manipulation des objets sans contamination.

Par exemple, l'objet peut avoir un poids de 0.1 milligrammes à 10 grammes et un diamètre de 0.2mm à 40mm.

Dans un mode de réalisation, le dispositif permet de maintenir un écart (également appelé distance de suspension) entre 1 et 80 micromètres, de préférence entre 5 et 60 micromètre entre la face de saisie et la surface de l'objet opposée à ladite face de saisie. La distance peut dépendre des dimensions de l'objet, notamment plus l'objet est petit, plus la distance peut être petite.

D'autres buts et aspects avantageux de l'invention apparaitront à la lecture de la description détaillée de formes d'exécution et des dessins.

**Brève description des figures**

La figure 1a est une vue schématique d'un système de manutention d'un objet sans contact selon une forme d'exécution de l'invention ;

La figure 1b est une vue schématique d'une partie d'un système de manutention d'un objet sans contact selon une forme d'exécution de l'invention;

La figure 2a est une vue en coupe d'un outil de manutention sans contact selon une forme d'exécution de l'invention, une tête de l'outil étant désassemblée du corps de l'outil;

La figure 2b est une vue en coupe d'un outil de manutention sans contact selon une forme d'exécution de l'invention, montrant la tête assemblée au corps, et avec une partie de connexion du système d'aspiration monté sur l'outil ;

La figure 2c est une vue en perspective d'un outil de manutention sans contact selon une forme d'exécution de l'invention, avec une partie de connexion du système d'aspiration monté sur l'outil et comprenant un système de décharge électrique;

La figure 2d est une vue en perspective similaire à la figure 2c, avec un système de décharge électrique séparé selon une variante;

La figure 3a est une vue en perspective d'un corps et une tête séparables d'un outil de manutention sans contact selon une première forme d'exécution de l'invention ;

La figure 3b est une vue en coupe dans un plan traversant l'axe des pièces de la figure 3b assemblées et la figure 3c une vue en coupe selon la ligne G-G de la figure 3b,

La figure 3d est une vue détaillé d'une partie de couplage de la tête de la figure 3a ;

La figure 4 est une vue en perspective d'une tête séparable d'un outil de manutention sans contact selon une deuxième forme d'exécution de l'invention ;

La figure 5a est une vue en perspective d'une tête séparable d'un outil de manutention sans contact selon une troisième forme d'exécution de l'invention ;

La figure 5b est une vue partielle détaillée d'une face de saisie de la tête de la figure 5a ;

La figure 6 est une vue en perspective d'une tête séparable d'un outil de manutention sans contact selon une quatrième forme d'exécution de l'invention ;

La figure 7a est une vue en perspective d'une tête séparable d'un outil de manutention sans contact selon une cinquième forme d'exécution de l'invention ;

La figure 7b est une vue d'une face de saisie de la tête de la figure 7a ;

La figure 8a est une vue en perspective d'une tête séparable d'un outil de manutention sans contact selon une sixième forme d'exécution de l'invention ;

La figure 8b est une vue latérale de la tête de la figure 8a ;

La figure 9a est une vue en perspective d'une tête d'un outil de manutention sans contact selon une septième forme d'exécution de l'invention ;

La figure 9b est une vue d'une face de saisie de la tête de la figure 9a ;

La figure 10 est une illustration schématique illustrant l'alignement d'un objet par rapport à la tête d'un outil ;

La figure 11a illustre schématiquement les forces de répulsion et d'aspiration sur un objet situé à une distance proche de la face de saisie de l'outil;

La figure 11b illustre un graphique montrant la force de répulsion dû à des ondes ultrasoniques ainsi que la force d'aspiration sur un objet en fonction de la distance séparant l'objet de la face de saisie de l'outil;

La figure 11c est un graphique schématique de la force de répulsion crée par une onde ultrasonique en fonction de la distance d'une surface émettrice ;

La figure 12a est un graphique illustrant la relation entre la hauteur du transducteur en fonction de la fréquence de résonance fondamentale du transducteur, et la figure 12b un graphique illustrant la relation entre la hauteur du transducteur en fonction de la taille de l'objet à saisir.

La figure 13 illustre le profil de l'amplitude d'une onde en fonction de la position axiale dans l'outil pour une fréquence du générateur correspondant à la première fréquence harmonique du transducteur ;

La figure 14 illustre une courbe d'impédance électrique en fonction de la fréquence du générateur d'un transducteur d'un outil de manutention sans contact selon une forme d'exécution de l'invention.

## Description de formes d'exécution de l'invention

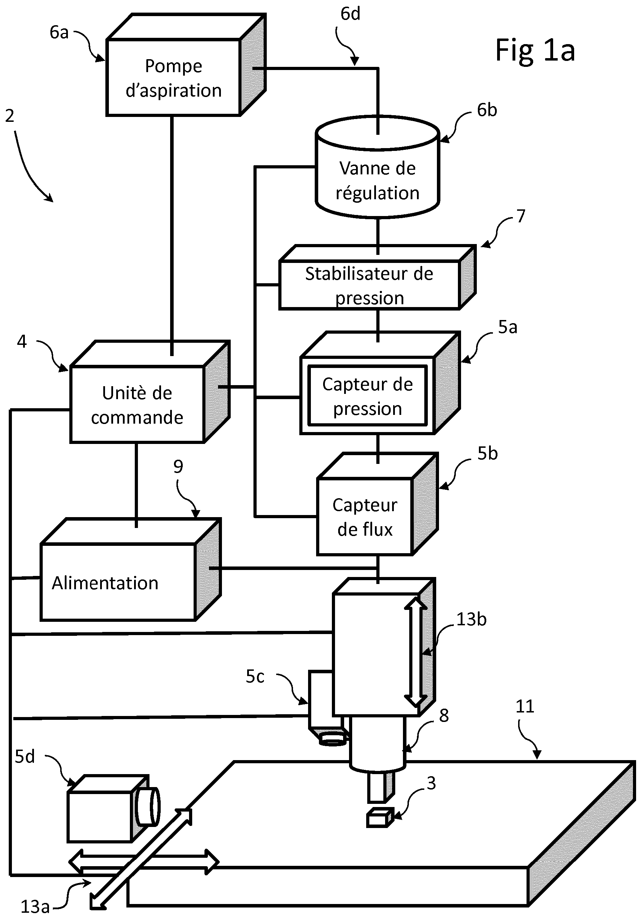

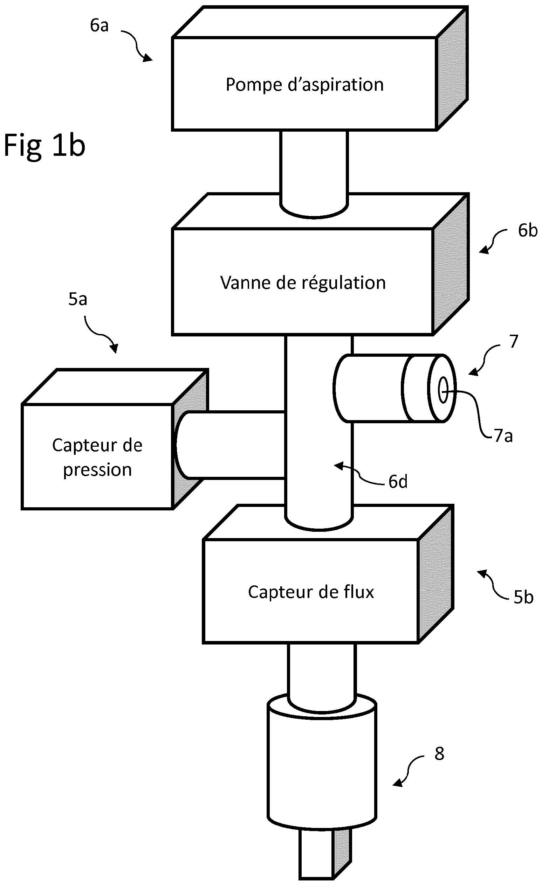

Faisant référence aux figures, notamment les figures 1, 2a, et 2b, un système de manutention 2, selon une forme d'exécution de l'invention, est illustré. Le système de manutention 2 est notamment configuré pour la saisie et placement d'un objet 3 sans entrer au contact direct avec l'objet. Le système de manutention 2 selon des formes d'exécution de l'invention est configuré pour la manutention d'objets petits, notamment d'objets ayant une masse inférieure à 20 grammes, voir inférieure à 10 grammes. Le système de manutention 2 selon des formes d'exécution de l'invention est très avantageusement configuré pour la manutention d'objets très petits et notamment d'objets ayant une masse inférieure à 1 g allant jusqu'à 0.01 milligrammes.

Le système de manutention sans contact selon des formes d'exécution de l'invention est notamment configuré pour être intégré dans une machine d'assemblage, notamment un robot d'assemblage de micro-composants dans une chaîne de fabrication d'un produit. Des exemples d'applications non exhaustives comprennent :

- le saisie-placement sur une carte de circuit de petits composants électroniques comme des semi-conducteurs, des microsystèmes de type MEMS ou MOEMS, des biopuces, des transistors en couches minces, des chips ou d'autres composants électroniques ;
- la saisie de puces semi-conducteurs directement d'une plaquette de semi-conducteur;
- la saisie de petits composants sur un support adhésive ;
- la manutention de petits composants électroniques pour divers opérations telles que l'inspection, le contrôle de qualité, l'emballage, ou l'assemblage ;
- la manutention de pièces micro-mécaniques pour des petits moteurs ;
- la manutention de pièces d'horlogerie, comme les pièces qui composent un mouvement, le cadran, des aiguilles, des appliques, le verre, par exemple pour l'assemblage des pièces, la manipulation de pièces après diamantage, le traitement de surface, ou pour le contrôle de qualité et l'inspection;
- la manutention de composants utilisés pour fabriquer des composés pour l'aérospatial ;
- la manutention de composants utilisés pour fabriquer des dispositifs médicaux ;
- la manutention de composants utilisés dans les technologies médicales ou pharmaceutiques.
- la manutention de petits organismes vivants, par exemple se trouvant dans une gouttelette de liquide, des embryons, des nématodes dans ou hors de l'eau.

Dans de nombreuses applications où les microcomposants ont des masses inférieures à 10gm, voir inférieures à 1 gramme, pour assemblage dans des produits de volume restreint ou à l'intérieur de volumes restreints, l'encombrement de l'outil de manutention a une conséquence importante. En effet, plus l'encombrement de l'outil est faible, plus il y a de versatilité dans l'utilisation de l'outil et notamment pour le placement de produits dans des espaces restreints, des ouvertures restreintes et d'autres contraintes au déplacement d'un outil par rapport à d'autres outils ou parties du produit dans lesquelles les composants sont assemblés.

Par ailleurs, une réduction de la taille et la masse de l'outil permet un déplacement plus rapide puisque l'inertie de l'outil est réduite, augmentant ainsi les performances de manipulation de l'outil, par exemple pour l'assemblage de composants.

L'utilisation d'un système de manutention sans contact permet d'éviter les problèmes liés aux outils de manutention avec contact, entre autre:

- le risque d'endommager le composant
- les problèmes d'adhésion d'un objet de petite taille et de ne pas pouvoir facilement lâcher l'objet,
- la difficulté de saisir et de placer un objet de petite taille avec suffisamment de précision ou de contrôle,
- le risque de contaminer le composant.

Selon une forme d'exécution, le système de manutention sans contact 2 comprend une unité de commande 4, un dispositif d'aspiration 6, et un outil de manutention sans contact 8. Le dispositif d'aspiration comprend une pompe d'aspiration 6a couplé à l'outil de manutention par un canal 6d pour aspirer un fluide, notamment un gaz, à travers l'outil de manutention sans contact. Le dispositif d'aspiration peut en outre comprendre une vanne de régulation 6b et des capteurs, notamment un capteur de pression 5a et un capteur de flux 5b. L'unité de commande 4 comprend une alimentation 9 et un circuit de commande avec un microprocesseur pour contrôler un générateur d'ultrasons dans l'outil de manutention comme il sera décrit plus en détail ci-après. L'unité de commande peut aussi être reliée au système d'aspiration, notamment la pompe d'aspiration 6a et/ou la vanne de régulation 6b. L'unité de commande permet notamment de contrôler la saisie et le relargage de l'objet 3 par l'outil de manutention sans contact 8.

L'unité de commande 4 est illustrée comme étant une seule unité de commande mais dans le cas de l'invention il est bien entendu possible d'avoir plusieurs unités de commande qui peuvent être reliées entre elles pour le contrôle des divers dispositifs tels que le dispositif d'aspiration 6, l'outil de manutention sans contact 8 et une table de placement 11 sur laquelle l'objet 3 est posé.

Le dispositif d'aspiration 6 peut comprendre la pompe d'aspiration 6a connectée à la vanne de régulation 6b ainsi qu'un stabilisateur de pression 7 et un/ou plusieurs capteurs, notamment un capteur de pression 5a et un capteur de flux 5b. La vanne de régulation 6b peut comprendre une électrovanne proportionnelle qui, en fonction de la pression mesurée par le capteur de pression 5a (qui peut se trouver entre 0,01 kPa et 100 kPa) peut être configuré pour maintenir la sous-pression pour la succion à un niveau constant ou essentiellement constant afin de contrôler la distance de suspension ds entre la face de saisie 29 et l'objet 3. En effet, le niveau de pression est influencé par la distance entre l'objet 3 et la face de saisie 29. Une pression très faible (une forte sous-pression) impliquant que la distance séparant l'objet de la face de saisie est trop faible et qu'il y a un risque de contact, alors qu'un niveau de pression trop élevé (une faible sous-pression de succion) indique que la distance est trop grande et qu'il y a un risque de relâchement de l'objet 3. Le niveau de sous-pression mesuré par le capteur de pression 5a permet de fournir en temps réel la mesure de pression à l'unité de commande 4 qui ajuste l'électrovanne afin de garder la pression constante.

Le capteur de flux 5b peut aussi être utilisé seul ou conjointement avec le capteur de pression 5a pour déterminer la présence d'un espace entre l'objet et la face de saisie. Si l'objet 3 est en contact avec la face de saisie 29 de la tête 28, le flux d'air à travers les buses 32 peut être arrêté ou très faible alors qu'un flux très élevé indique que l'objet n'est plus saisi. L'amplitude du flux dans une gamme de valeurs prédéterminés peut être utilisé pour indiquer la présence d'un espace confirmant que l'objet est saisi par l'outil.

Dans une variante, le contrôle de la distance entre l'objet 3 et la face de saisie 29 de la tête 28, peut être effectué par le contrôle de la puissance du transducteur d'ultrasons 10, et donc de la force répulsive, seul ou conjointement avec un contrôle de la succion par le système d'aspiration comme décrit ci-dessus.

Le stabilisateur de pression 7 peut être utilisé pour fixer un seuil de sécurité de la sous-pression afin d'éviter que la sous-pression devienne trop forte, notamment pour éviter de boucher les buses ou les canaux d'aspiration en cas de contact entre la face de saisie 29 et l'objet. Il peut donc être réglé pour éviter un dommage de l'objet ou de l'outil, en particulier pour éviter l'introduction de parties de l'objet dans les buses et canaux d'aspiration. Le stabilisateur de pression peut donc être utilisé par l'outil de commande pour fixer un seuil de pression permise par l'électrovanne.

Dans une forme d'exécution, le stabilisateur de pression comprend ou est constitué par un orifice résistif 7a qui est configuré pour fournir une résistance au flux d'air plus grand que le canal d'aspiration 30 avec les buses 32, notamment une résistance au flux d'air au moins deux fois, de préférence au moins trois fois plus grand, de préférence au moins quatre fois plus grand que la résistance au flux d'air généré par le canal d'aspiration 30 conjointement avec la ou les buse(s) 32. L'orifice résistif diminue la pente d'accroissement de la sous-pression (à savoir la pente de diminution de la pression) en fonction de l'inverse de la distance de l'objet 3 de la face de saisie 29, tout en permettant au système d'aspiration de fournir une succion suffisante pour la lévitation de l'objet. Cela réduit le risque de placage de l'objet contre la face de saisie, et en cas de placage, réduit la force d'aspiration sur l'objet.

L'orifice résistif peut par exemple avoir une surface en section transversale de la moitié ou moins de la surface en section des buses 32.

Dans une variante, le stabilisateur de pression peut comprendre une soupape connectée fluidiquement au canal d'aspiration d'un côté et à l'air ambient de l'autre côté, la soupape ouvrant la connexion lorsque la pression diminue en dessous d'un seuil prédéterminé configuré pour laisser l'air ambient entrer dans le canal d'aspiration afin de faire augmenter la pression (diminuer la sous-pression).

Un système de manutention selon une forme d'exécution de l'invention peut aussi inclure la commande d'une table de placement 11 sur laquelle l'objet 3 est saisi et/ou placé. Il peut bien entendu y avoir plusieurs tables de placement, par exemple une table de placement pour la saisie de l'article et une table de placement sur laquelle l'objet est déposé, un article à fabriquer étant placé sur l'une des tables pour l'assemblage de l'objet. En raison de la lévitation sans contact de l'objet 3, l'accélération horizontale est limitée, typiquement à 1g. Dans une forme d'exécution, la table de placement 11 est commandée dans son déplacement dans le plan horizontal, notamment en translation selon les deux axes orthogonaux 13a mais éventuellement aussi en rotation, alors que l'outil de manutention 8 est commandé uniquement en translation verticale et éventuellement en rotation autour de l'axe vertical 13b, afin d'accélérer le procédé de saisie/placement.

Dans une variante, l'outil de manutention 8 peut être commandé en translation verticale et également en translation selon les axes horizontaux dans un sens opposé à la direction de translation de la table pour augmenter la vitesse relative entre la table 11 et l'outil 8.

L'outil de manutention sans contact 8 comprend un transducteur d'ultrasons 10 pour créer une force de répulsion sur l'objet 3, et un système d'aspiration pour créer une force d'attraction sur l'objet 3, les forces d'attraction et de répulsion pouvant être équilibrés afin de suspendre l'objet à une distance de suspension $d_s$ non nulle d'une extrémité formant une face de saisie 29 de l'outil. Les forces d'attraction et de répulsion peuvent être variées par l'unité de commande 4 afin de saisir l'objet, le déplacer et le lâcher à un endroit voulu.

Le système d'aspiration comprend un canal d'aspiration 30 traversant l'outil de manutention 8, couplé à une extrémité 21 au dispositif d'aspiration 6 et débouchant sur l'autre extrémité 29 par une ou plusieurs buses d'aspiration 32. Dans une forme d'exécution, telle qu'illustré dans la figure 2c, le dispositif d'aspiration comprend un connecteur 6e, par exemple sous forme d'une coiffe montée sur l'extrémité 21 du transducteur et comprenant un joint d'étanchéité 35, par exemple comprenant un O-ring, encerclant le corps arrière 22 du transducteur. Le connecteur 6e comprend une entrée, par exemple sous forme d'un bec 37, pour connecter un tuyau connecté à la pompe d'aspiration.

Le transducteur d'ultrasons 10 comprend un générateur de vibrations 12 et un dispositif de transmission 18 couplé au générateur 12. Dans l'exemple illustré, le générateur 12 comprend un empilement d'éléments piézoélectrique 14, de préférence des anneaux piézoélectriques en céramique, pris en sandwich entre un corps arrière 22 et un corps frontal 24 du dispositif de transmission 18. Un organe de précontrainte 20, par exemple sous forme d'une vis, traverse des orifices centraux 16 des anneaux piézoélectriques 14. L'organe de précontrainte est configuré pour appliquer une force de traction entre le corps arrière 22 et le corps frontal 24 conduisant à une force de compression agissant sur l'empilement d'anneaux piézoélectriques pris en sandwich entre ces deux corps.

Dans une forme d'exécution avantageuse de l'invention, le transducteur d'ultrasons 10 comprend deux anneaux piézoélectriques en céramique pris en sandwich entre un corps arrière 22 et un corps frontal 24 du dispositif de transmission 18. Cela permet d'opérer à très haute fréquence dans une configuration très compacte.

Des signaux électriques fournis par le circuit de commande 4 aux électrodes des éléments piézoélectriques permettent de générer une expansion axiale périodique des éléments piézoélectriques 14 pour générer des ondes ultrasoniques dans le dispositif de transmission 18. Le principe général de fonctionnement d'un transducteur d'ultrasons 10 avec des éléments piézoélectriques (notamment piézoélectriques céramiques) en sandwich entre un corps arrière et un corps frontal est en soi connu. Dans le cadre de l'invention, il est toutefois possible d'employer d'autres formes de transducteur d'ultrasons dans la mesure où celles-ci sont capables de générer les forces de répulsion nécessaires pour une saisie sans contact de l'objet en tenant compte de la force d'aspiration appliquée. Dans l'exemple illustré, le générateur comprend avantageusement un empilement de deux à six anneaux piézoélectriques céramiques 14, les anneaux piézoélectriques aux extrémités axiales étant orientés de sorte à ce que les électrodes neutres soient orientées respectivement vers le corps arrière 22 et le corps frontal 24.

Le dispositif de transmission 18 comprend le corps arrière 22, le corps frontal 24, et l'organe de précontrainte 20, qui peut être notamment une vis traversant le corps arrière 22 et l'empilement d'anneaux piézoélectriques 14 disposé en sandwich entre le corps arrière 22 et le corps frontal 24. Le corps arrière 22 agit comme réflecteur pour les ondes ultrasoniques générées, le corps frontal transmettant les ondes vers une tête 28 disposée à l'extrémité de saisie du dispositif de transmission 18.

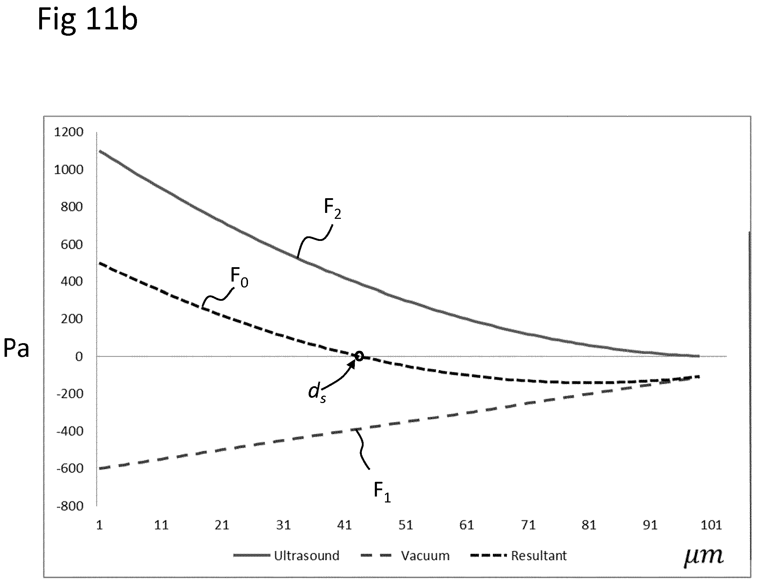

La tête 28 comprend une portion terminale 28a avec une face de saisie 29 formant la face de saisie placée en regard de l'objet 3 à saisir. La portion terminale 28a comprend les buses d'aspiration 32 connectées au canal d'aspiration 30 et qui débouchent sur la face de saisie 29. Les ondes ultrasoniques générées par le générateur 12 sont émises par la face de saisie 29. Comme illustré dans la figure 11a et 11b, les ondes ultrasoniques génèrent une surpression relative à la pression ambiante générale, créant une force de répulsion F2 sur l'objet 3, alors que l'aspiration de fluide par la buse d'aspiration 32 génère une sous pression relative à la pression ambiante générale, créent une force d'attraction F1 sur l'objet 3. La force d'aspiration F1 augmente lorsque la distance entre l'objet et la face de saisie 29 décroit. Toutefois, la force de répulsion F1 générée par les ultrasons augmente lorsque la distance entre l'objet et la face de saisie 29 décroit.

La force de répulsion est illustrée dans la figure 11c. Lorsque l'on est dans la zone des champs proches (dite zone de Fresnel acoustique), à savoir dans la zone 1 où la distance séparant l'objet de la face de saisie 29 est bien inférieure à

$\lambda/4$, $\lambda$ étant la longueur d'onde de l'ultrason généré, la force de répulsion augmente rapidement correspondant essentiellement à une augmentation suivant la fonction. La caractéristique de croissance de la force d'aspiration en fonction de la distance entre la surface de l'objet 3 et la face de saisie 29 est moins prononcée de sorte à ce que l'on trouve une distance de suspension $d_s$ d'équilibre où la force d'aspiration F2 est égale à la force de répulsion F1 plus le poids de l'objet (voir figure 11b).

Dans des exemples d'application de l'invention, la distance d'équilibre $d_s$ entre des forces de répulsion et d'attraction en fonction de la masse et la surface de l'objet se trouve typiquement entre $1\mu m$ et $80\mu m$.

Voici un exemple d'un composant à manipuler et les paramètres A titre d'exemple

| Composant | surface | masse | Force pour soulever |
|---|---|---|---|
| Roue d'une montre | 16 [mm^2] | 14 [mg] | 13.72 [mN] |

| **Pression à 40 [um] distance de suspension** | |
|---|---|
| Force d'aspiration sur une surface de 4[mm^2] <= 13.72 [mN], | $Pv = \dfrac{Force}{Area} = \dfrac{13.72\ [\text{mN}]}{4[\text{mm\textasciicircum}2]} = 3.34[kPa]$ |
| Force de répulsion par ultrasons sur une surface de 12[mm^2]<= 13.72 [mN] | $Pus = \dfrac{Force}{Area} = \dfrac{13.72\ [\text{mN}]}{12[\text{mm\textasciicircum}2]} = 1.14[kPa]$ |

En variant ces deux valeurs on peut changer la distance de suspension ds par exemple:

- si la pression d'aspiration < 3.34[kPa] la distance de suspension est plus grand que 40 $\mu m$
- si la pression de répulsion par ultrasons <1.14 kPa la distance de suspension est plus petit que $40\mu m$.

Ces valeurs sont typiques pour des composants plus petit que 5mm.

Dans une forme d'exécution préférentielle, la tête 28 du dispositif de transmission 18 peut avantageusement être sous forme d'une pièce séparable du corps frontal 24, comme illustré dans les figures 2a-9. Cela permet de changer la tête 28 en fonction de l'objet 3 à manipuler. En effet, pour obtenir un auto-centrage stable de l'objet 3 par rapport à l'outil de manutention sans contact 8, il est avantageux à ce que la surface de la face de saisie 29 soit de forme et de taille identiques à la forme et la taille de la surface de l'objet 3 en regard de ladite face de saisie 29, ou dans une gamme de 80% à 300% de la taille de la surface de l'objet 3 en regard de ladite face de saisie 29. Une prise, tel qu'un plat 39, permet de dévisser et visser la tête au corps frontal

La stabilité latérale est donnée principalement par l'écoulement du fluide autour de l'objet vers la ou les buses d'aspiration 32, la sous-pression agissant sur l'objet étant configurée par la ou les buses d'aspiration pour être d'amplitude maximale vers le centre de la face de saisie 29. Par contre, la surpression générée par les ultrasons en champ proche a de préférence une caractéristique d'amplitude essentiellement constante sur toute la face de saisie 29 afin d'assurer que la surface de l'objet 3 en regard à la face de saisie 29 soit stabilisée dans une position essentiellement parallèle à cette face de saisie 29. Il en résulte une stabilité latérale, conduisant à un centrage de l'objet par rapport à l'axe A de l'outil de manutention, ainsi qu'une stabilité contre la rotation de l'objet autour d'un axe orthogonal à l'axe A. Cela permet de garder la face de l'objet en regard à la face de saisie 29, à une distance constante de suspension $d_s$ très faible, en particulier inférieure à $80\mu$, plus particulièrement inférieure à $50\mu$. La très grande stabilité et la très faible distance d'équilibre (distance de suspension) $d_s$ permettent une saisie et un placement de l'objet extrêmement précis.

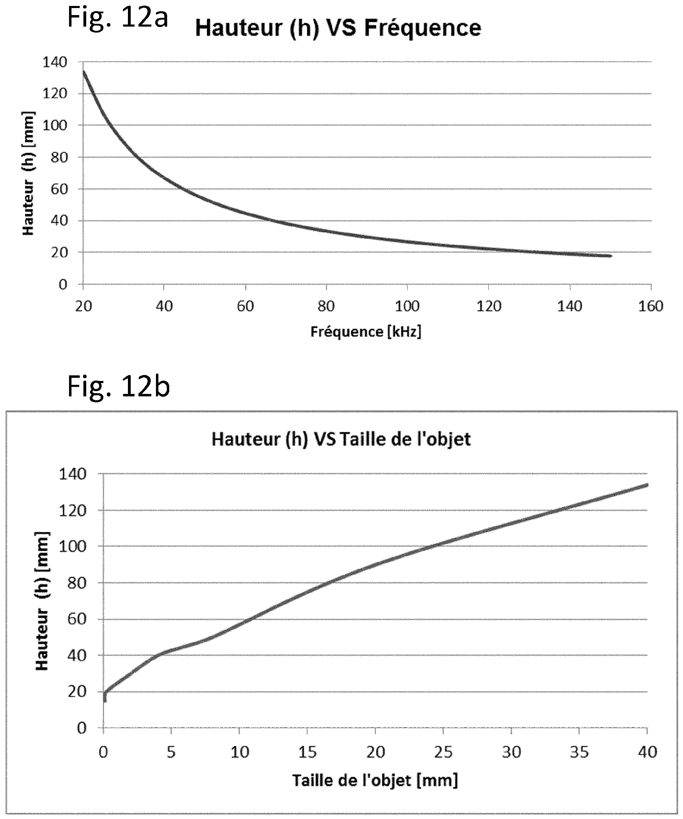

Le transducteur d'ultrasons 10, selon l'invention, comprend une hauteur h entre l'extrémité correspondant à la face réflectrice 21 du corps arrière 22 et l'extrémité correspondant à la face de saisie 29, essentiellement équivalent à une demi-longueur d'onde $\lambda/2$ des ultrasons générés à l'intérieur du transducteur d'ultrasons 10 à la fréquence fondamentale. La longueur d'onde des ultrasons générés dans le transducteur dépend des matériaux formant le transducteur, puisque la longueur d'onde dépend de la vitesse du son dans le milieu concerné. Les matériaux formant le transducteur comprennent typiquement des alliages d'aluminium ou de titane (ou encore de magnésium) pour le corps frontal et la tête, de l'acier pour le corps arrière (qui réfléchit les ondes), et de la céramique pour les éléments piézoélectriques. La vitesse du son dans l'aluminium est d'environ 6200m/s, alors que la vitesse du son dans l'air est d'environ 343m/s. Un transducteur avec un corps frontal et une tête en aluminium, ainsi qu'un générateur piézocéramique, fonctionnant à une fréquence résonante de 50 kHz, a une longueur d'onde à la fréquence fondamentale d'environ 100mm, alors que la longueur d'onde des ultrasons émis à la face de saisie dans l'air est environ 7mm. La gamme de matériaux utilisables pour la génération d'ultrasons est à présent assez limitée (aluminium, magnésium, titane) et les vitesses du son dans ces matériaux sont comparables, de sorte à ce que la relation entre la fréquence et la hauteur du transducteur est proche ou équivalent à la relation illustrée dans la figure 12a. Pour une fréquence fondamentale du transducteur de 40kHz, la hauteur h du transducteur est d'environ 60mm, alors que pour une fréquence fondamentale de 140kHz, la hauteur h du transducteur est d'environ 20mm.

Dans des variantes selon l'invention, la hauteur h peut être dans une gamme de 80% à 140% de ladite demi-longueur d'onde λ/2 à la fréquence fondamentale, notamment dans une gamme de 90% à 110% de ladite demi-longueur d'onde λ/2 à la fréquence fondamentale.

Dans des dispositifs de l'art antérieur, on couple une sonotrode au transducteur, la sonotrode correspondant au moins à une demi-longueur d'onde (parfois plus) (à la fréquence fondamentale) et le transducteur correspondant au moins à une demi-longueur d'onde (à la fréquence fondamentale), les outils de l'art antérieur ayant une longueur entre extrémités d'au moins une longueur d'onde (à la fréquence fondamentale) des ultrasons générés. L'encombrement de tels outils pour des applications dans des espaces étriquées, notamment pour la manutention de composants très petits (en particulier ayant des masses inférieures à 10gm, voir inférieures à 1gm), est un inconvénient et peut, selon l'application, rendre l'utilisation de tels outils impossible.

Dans l'invention, l'intégration du système d'aspiration directement dans un outil de manutention muni du transducteur permet d'avoir la solution la plus compacte, ayant une hauteur correspondant à la demi-longueur d'onde à la fréquence fondamentale des ultrasons générés dans le transducteur.

La fréquence opérationnelle des dispositifs connus correspond à la fréquence fondamentale du transducteur, puisque l'amplitude des ultrasons générées est maximale à la fréquence fondamentale.

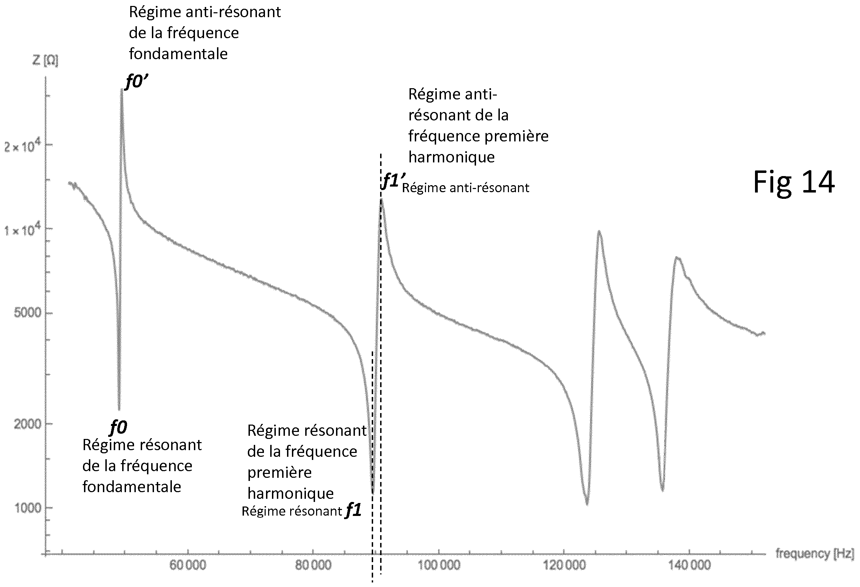

La figure 14 montre l'impédance du générateur d'ultrasons pour un transducteur ayant approximativement une demi longueur d'onde à la fréquence fondamentale *f0.*

Selon l'invention, la fréquence opérationnelle du transducteur correspond à la première fréquence harmonique *f1* du transducteur. Il a été trouvé par les inventeurs que, de manière surprenante, il est plus avantageux de configurer le dispositif pour travailler à un régime de fréquence correspondant à la première harmonique *f1* qu'à la fréquence fondamentale. Comparé à une opération à la fréquence fondamentale, la fréquence plus élevée des oscillations de la première harmonique couplée avec une l'amplitude des oscillations à la face de saisie 29, certes plus faible, mais toujours suffisamment importantes, permet d'améliorer la stabilité de prise et de fournir un rapport optimal entre la force de poussée et la stabilité. En effet, il a été constaté que l'une des sources d'instabilité, notamment pour des petits objets tels que des objets millimétriques ou micrométriques, est la grande amplitude des oscillations à la fréquence fondamentale du transducteur. Par ailleurs, une opération de l'outil de manutention à la première fréquence harmonique du transducteur génère des déformations d'ordre plus élevées (qu'à la fréquence fondamentale) à la face de saisie 29 qui contribuent à une distribution du profil des ultrasons dans le champ proche plus uniformes et par conséquent une force répulsive plus uniforme, contribuant ainsi à une meilleure stabilité de prise de l'objet.

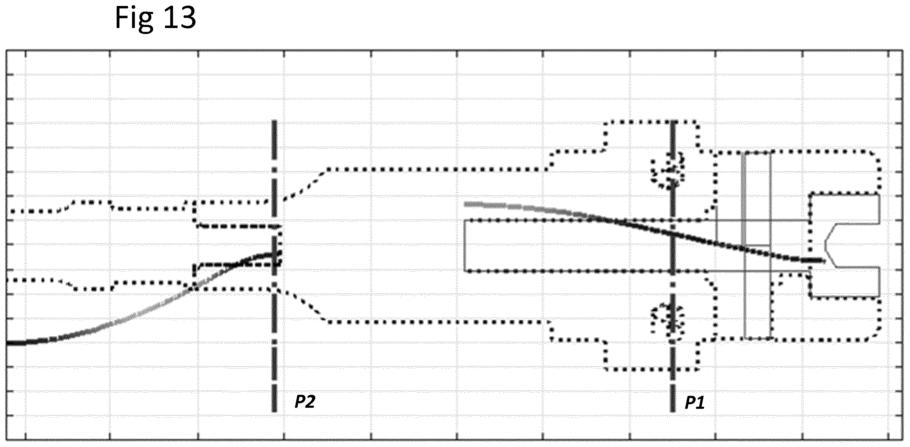

La figure 13 illustre le profil de l'amplitude d'une onde en fonction de la position axiale dans l'outil pour une opération à la première fréquence harmonique du transducteur (la hauteur du transducteur ayant approximativement une demi-longueur d'onde λ/2 des ultrasons à la fréquence fondamentale). A la fréquence fondamentale, il n'y a qu'un plan nodal (non-illustrée), à savoir un plan où l'amplitude de l'onde dans le transducteur est essentiellement zéro. A la première fréquence harmonique il y a toutefois deux plans nodaux *P1, P2,* le premier *P1* vers l'arrière du transducteur et la deuxième *P2* vers la tête du transducteur. On peut avantageusement situer le plan de fixation du transducteur proche ou au niveau du premier plan nodal *P1*, et situer l'interface d'accouplement 28b entre la tête 28 et le corps frontale 24 proche ou au niveau du deuxième plan nodal *P2.* Cela permet de diminuer l'usure du transducteur en diminuant les pertes du au micro-frottements à l'interface avec la tête, et à améliorer en même temps la performance (i.e. augmenter la puissance des ultrasons) en réduisant les pertes de transmission d'énergie.

Un dispositif de manutention comprenant un transducteur configuré pour opérer à la première fréquence harmonique *f1* est très avantageux pour un transducteur d'une demi longueur d'onde d'hauteur, mais peut aussi être implémenté avec un transducteur d'une longueur d'onde d'hauteur dans le cadre de cette invention.

Dans l'invention, le corps frontal 24 ainsi que de l'organe de précontrainte 20 (la vis dans l'exemple illustré) et le générateur d'ultrasons 12 sont conçus pour amplifier l'amplitude des ultrasons générés toute en gardant une hauteur aussi faible que possible et en intégrant le système d'aspiration 30, 32, 6e. A cet effet, le corps frontal 24 comprend deux, trois ou plus de réductions de diamètres configurées pour permettre d'amplifier les vibrations dans le sens axial *A*, en minimisant les vibrations radiales ou latérales (orthogonales à la direction axiale), afin d'assurer la création d'une onde de pression ultrasonique stable et uniforme à la face de saisie 29. Dans une forme d'exécution ou il y a au moins trois réductions de diamètre, par exemple comme illustré dans la figure 2b, les rapports entre les diamètres successives D1, D2, D3, D4 dans le sens décroissant se trouvent dans une gamme

- pour D1/D2, entre max 2,6 et min 1,1
- pour D2/D3, entre max 2,6 et min 1,1
- pour D3/D4, entre max 6 et min 1,1

et de préférence dans une gamme :

- pour D1/D2, entre max 1,6 et min 1,4
- pour D2/D3, entre max 1,6 et min 1,3
- pour D3/D4, entre max 5 et min 1,2

Dans une forme d'exécution ou il y n'y a que deux réductions de diamètre dans le corps frontal, les rapports entre les diamètres successives D1, D2, D3, dans le sens décroissant se trouvent de préférence dans une gamme

- pour D1/D2, entre max 2,6 et min 1,3
- pour D2/D3, entre max 5 et min 1,2

Dans une forme d'exécution ou il y a quatre ou plus de réductions de diamètre dans le corps frontal, les rapports entre les diamètres successives D1, D2, D3, D4, D5 dans le sens décroissant peuvent suivre les relations ci-dessus, les subséquentes se trouvant entre max 6 et min 1,1.

Dans une forme d'exécution préférentielle, afin de diminuer l'encombrement de l'outil, le système de manutention sans contact est configuré pour générer des ultrasons dans une gamme de fréquence de 30 à 500 kHz, de préférence entre 40 et 300 kHz selon la taille de l'objet à manipuler. La hauteur de l'outil et la fréquence utilisée peuvent être définies en fonction de l'objet à manipuler. Comme illustré dans la figure 12b, plus l'objet est petit, plus la hauteur de l'outil peut être faible et la fréquence élevée. Dans les systèmes conventionnels, les transducteurs travaillent typiquement dans une gamme de 20 à 40 kHz alors que dans la présente invention la combinaison d'une fréquence élevée telle que 80 kHz et d'un outil ayant une hauteur de demi-longueur d'onde d'environ $\lambda/2$ de la fréquence fondamentale permet de réduire de 4 à 8 fois la hauteur de l'outil de manutention par rapport aux outils conventionnels. A cet égard, le fait de travailler avec des ultrasons à champ proche pour la force de répulsion permet de diminuer la force d'aspiration ainsi que la puissance nécessaire pour générer les ultrasons.

Un élément de fixation, telle qu'une bride de fixation 24b, peut avantageusement être disposée à la position ou proche de la position du premier plan nodal *P1* pour la fixation de l'outil à un bras de robot ou autre organe de machine pour le déplacement de l'outil de manutention. Dans un mode de réalisation, l'élément de fixation 24b peut avantageusement comprendre un couplage amortissant au corps 24, configuré pour amortir les vibrations résiduelles dans le plan nodal *P1.*

Le canal d'aspiration 30, dans une forme d'exécution, peut avantageusement être disposé le long de l'axe central A de l'outil de manutention, le canal ayant une section 30b traversant le corps frontal et une section 30a traversant la vis 20 pour un accouplement au dispositif d'aspiration 6. Pour un outil de manutention de faible hauteur, par exemple inférieur à 60 mm de hauteur, cela est particulièrement avantageux puisqu'il permet de faciliter l'accouplement du dispositif d'aspiration à l'outil. Toutefois, dans des variantes il est également possible de disposer le canal autrement dans le corps de l'outil de manutention de manière non centrale avec une entrée radiale dans le corps de l'outil, la fonction critique du canal étant la disposition de la buse ou des buses d'aspiration 32 à la face de saisie 29 de la tête 28.

Dans une forme d'exécution, l'outil comprend une buse d'aspiration débouchant sur la face de saisie, ladite buse d'aspiration étant centrée sur la face de saisie.

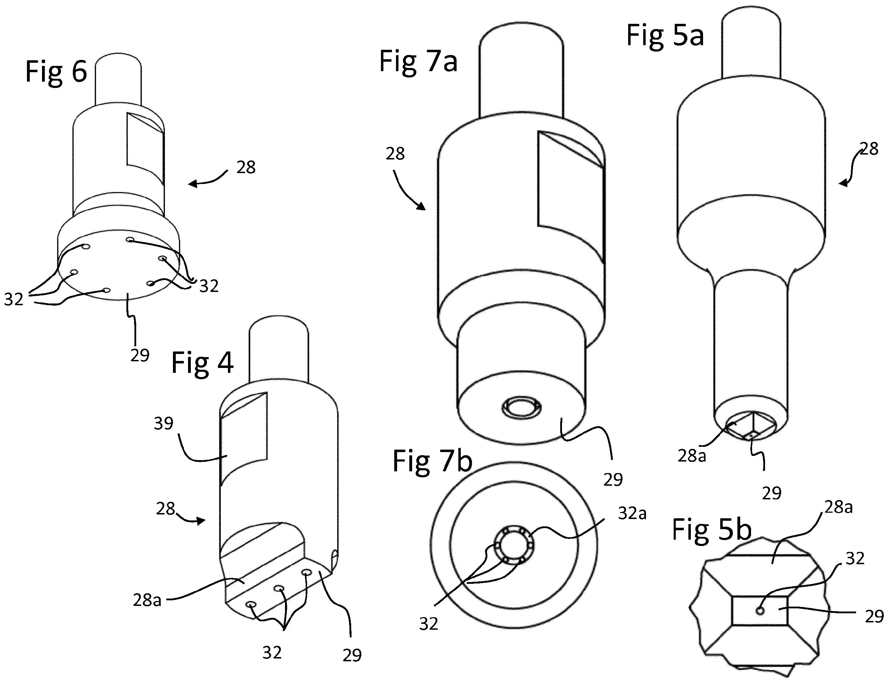

Dans d'autres formes d'exécution, l'outil comprend plusieurs buses d'aspiration débouchant sur la face de saisie, lesdites buses d'aspiration étant disposées par exemple autour du centre de la face de saisie. Des exemples sont illustrés dans les figures 6 à 7b. Une rainure 32a peut avantageusement être disposé dans la face de saisie 29 à la position des buses 32 de sorte à mieux répartir la pression du flux de gaz aspiré autour du centre de la face de saisie. On évite ainsi une localisation trop forte de la sous pression autour des buses 32. Un exemple est illustré dans la figure 7a, 7b.

Encore d'autres configurations peuvent être implémentées en fonction de la géométrie de l'objet à saisir et du flux hydrodynamique de fluide autour de l'objet à saisir. Les buses sont configurées pour assurer un profil de sous pression permettant d'attirer l'objet vers l'axe centrale A du dispositif de transmission afin de stabiliser latéralement l'objet par rapport à la face de saisie.

Dans une forme d'exécution, la tête 28 peut comprendre une portion terminale 28a configurée pour la suspension d'une goutte de liquide, la buse ou les buses étant configurée(s) pour créer un écoulement d'air ou de gaz autour de la goutte maîtrisant la forme essentiellement sphérique de la goutte, et de disposer sur la face de saisie 29 une couche hydrophobe pour repousser la goutte lorsqu'il est très proche ou rentre en contact accidentel avec la face de saisie.

Faisant référence à la figure 10, lorsque la face de saisie 29 de la buse a une forme qui correspond à la forme de l'objet 3, lorsqu'il y a une opération de saisie, notamment d'un petit objet, la face de l'outil 28 peut ne pas être alignée autour de l'axe vertical avec l'objet 3. Lorsque la face de saisie s'approche de l'objet 3, il y a un auto-centrage de l'objet avec la face de saisie. Toutefois, il y a diverses situations dans lesquelles les objets ne sont pas identiques et présentent des tolérances, ou que l'outil est utilisé pour des objets dans une gamme de forme et de taille où l'effet d'auto-centrage peut ne pas marcher. Il peut aussi y avoir des situations (lorsque) où des objets rectangulaires ou polygonaux avec certaines tolérances s'alignent de manière aléatoire dans la mauvaise orientation, notamment lorsqu'il y a des tolérances qui font que la forme de l'objet ne corresponde pas de manière identique ou très proche à la forme de la face de saisie de la tête.

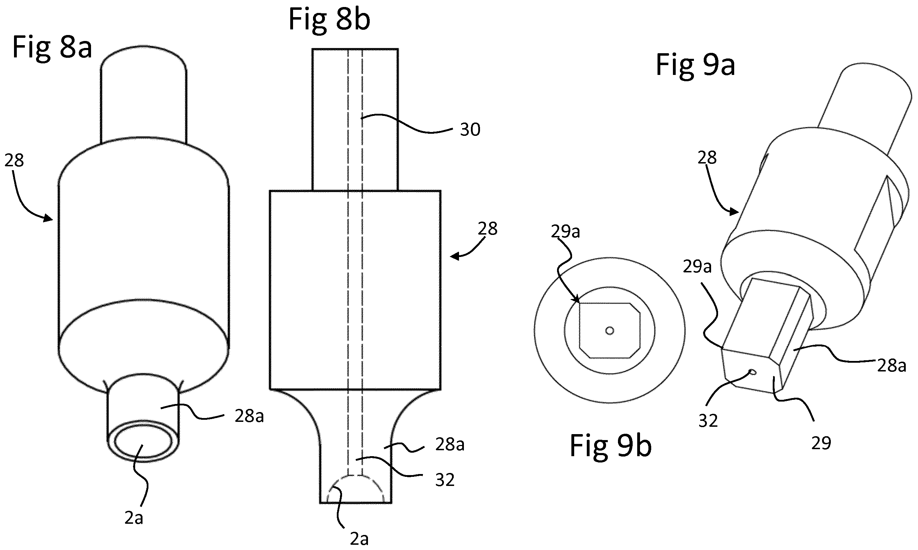

Afin de surmonter ce problème, dans une forme d'exécution, par exemple tel qu'illustré dans la figure 9, la face de saisie 29 comprend un coin 29a pointu et plusieurs autres coins arrondis, à savoir moins pointu que le coin de référence 29a. Le coin de référence 29a permet de servir comme référence d'alignement avec un coin de l'objet à saisir, de sorte à assurer un bon positionnement par rapport à la face de saisie. Cette solution d'avoir un des coins de la face de saisie plus pointu que les autres pour servir comme coin d'alignement pour l'objet peut être appliqué à des faces de saisie rectangulaires, polygonales ou de formes irrégulières.

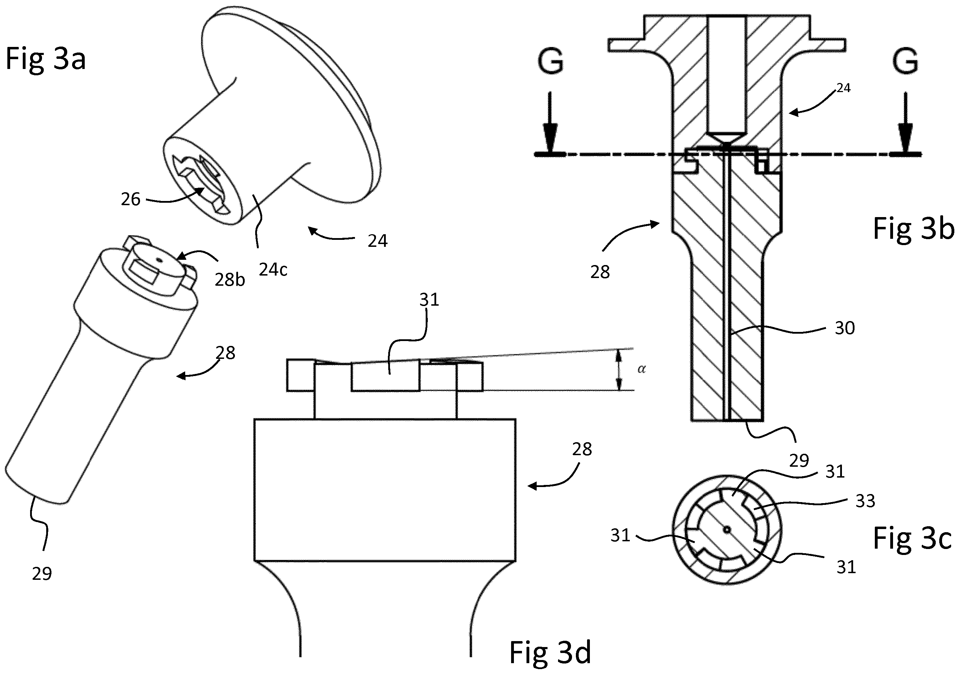

Dans une forme d'exécution, la tête 28 et le corps frontal 24c comprennent des éléments de fixation complémentaires sous forme d'un système de fixation à baïonnette comme illustré dans les figures 3a à 3d. Le système de fixation à baïonnette comprenant des ergots 31 sur une des pièces s'insérant dans une rainure 33 complémentaire de l'autre pièce, telle qu'illustré dans les figures 3a à 3d. La fixation à baïonnette permet un changement rapide de la tête, et par ailleurs assure une orientation angulaire précise (autour de l'axe central A) de la tête par rapport au corps frontal 24 de l'outil de manutention. En effet, la tête peut, dans certaines variantes, comprendre une face de saisie non-axisymétrique, par exemple carrée (voir figure 9), rectangulaire (voir figures 4 à 5b), ovale, polygonale, ou d'autres formes en fonction de l'objet à manipuler.

La tête 28, dans une variante, peut aussi être fixée au corps frontal 24 au moyen couplage fileté. D'autres moyens de fixation, en soi connus, peuvent aussi être utilisés dans l'outil selon l'invention.

L'outil de manutention peut avantageusement comprendre un jeu de plusieurs têtes interchangeables de dimensions ou de formes différentes pour permettre de changer la tête en fonction de l'objet à manipuler. Il est toutefois à noter que pour certaines applications, le corps frontal et la tête peuvent être solidaires sous forme d'une pièce monobloc.

Selon une forme d'exécution, l'unité de commande 4 et le générateur 12 peuvent être configurés pour générer des vibrations à une fréquence anti-résonnante *f1'* de la première fréquence harmonique, à savoir à une fréquence forcée proche de la fréquence résonnante *f1* de la première fréquence harmonique. La figure 14 montre graphiquement une courbe d'impédance électrique en fonction de la fréquence du générateur d'ultrasons, illustrant un point d'impédance minimum du régime résonant *f1* et un point d'impédance maximum du régime anti-résonant *f1'* (régime forcé). Les points *f1* et *f1'* sont très proches en fréquence et sont associés, le pique d'impédance minimum étant suivie par un pique d'impédance maximum avant la décroissance de l'impédance jusqu'à la prochaine harmonique. L'avantage de ce mode de fonctionnement et de cette configuration est de créer une vibration stable. Dans un système résonant, l'impédance faible demande un courant élevé et induit une forte déformation de la structure qui génère une certaine instabilité. Pour générer les vibrations forcées anti-résonnantes à des positions où l'impédance est élevée voire dans les zones où l'impédance est maximale, une forte tension est nécessaire pour obtenir l'amplitude de vibration requise pour générer les ultrasons, toutefois avec un courant faible. Des vibrations dans cette zone sont plus stables parce que la structure vibre d'une manière solide conduisant à une stabilité meilleure dans le contrôle de la force de répulsion des ultrasons générés. En effet, en travaillant sur des vibrations forcées, on peut plus facilement varier et maîtriser la force de répulsion des ultrasons dans le champ proche. Un avantage d'un système travaillant avec des vibrations forcées est que la surface de saisie 29 vibre avec une plus grande planéité que pour un régime résonant, ce qui peut améliorer la stabilité de saisie en raison de la pression d'onde répulsive plus plane.

Dans une forme d'exécution, le système de manutention sans contact peut comprendre en outre un dispositif de décharge électrique 40 (voir les figure 2d et 2e) afin d'éliminer les charges électrostatiques des objets. Le dispositif de décharge électrique 40 peut être séparé de l'outil de manutention 8 (figure 2e), ou intégré dans l'outil de manutention (figure 2d). L'élimination de charges électriques des objets permet de mieux contrôler les forces agissant sur l'objet, notamment afin d'éliminer les forces générées par une charge électrostatique de l'objet. Cela peut aussi être très avantageux pour bien maîtriser la distance d'équilibre entre l'objet et la face de saisie de l'outil augmentant ainsi la précision de saisie et de placement de l'objet par le système de manutention.

Dans une forme d'exécution, l'outil de manutention sans contact peut comprendre en outre un capteur de position afin de mesurer la position, et notamment la distance, de l'objet par rapport à la face de saisie. Le capteur peut être sous forme d'un capteur optique, inductive, capacitive ou à effet Hall disposé sur la face de saisie ou autour ou à côté de la face de saisie. Dans une forme d'exécution, le capteur de position est disposé au centre de la face de saisie, l'outil de manutention comprenant une pluralité de buses d'aspiration disposées autour du capteur. Le capteur peut être connecté au circuit de commande de l'unité de commande pour contrôler les forces agissant sur l'objet, notamment la force d'aspiration en contrôlant par exemple la puissance de la pompe d'aspiration ou une vanne sur le canal d'aspiration, et/ou en contrôlant la puissance des ultrasons émis. Cela peut aussi être très avantageux pour bien maîtriser la distance d'équilibre entre l'objet et la face de saisie de l'outil augmentant ainsi la précision de saisie et de placement de l'objet par le système de manutention. La position de l'objet par rapport à la face de saisie peut aussi être mesurée au moyen d'un ou plusieurs caméras ne faisant pas partie de l'outil de manutention.

Il convient toutefois de souligner que le contrôle de la distance de suspension $d_s$ peut aussi être effectué sans capteur de position selon des modes de réalisation, notamment en contrôlant la sous pression d'aspiration, cela en contrôlant la pompe d'aspiration 6a ou la vanne 6b, suivant la mesure de pression donnée par le capteur de pression 5a.

Prenant la direction de la force de gravité comme référentielle, il convient de souligner que l'objet 3 peut être saisi et manipulé en étant disposé au-dessous de la face de saisie 29, mais aussi au-dessus de la face de saisie, ou encore dans n'importe quelle autre orientation. La direction verticale illustrée dans les figures ne correspondent donc pas forcement à la direction de la force de gravité puisque l'outil de manutention selon l'invention peut suspendre un objet dans toutes les orientations en raison de l'auto centrage effectué par la force d'aspiration par rapport à la face de saisie.

*Liste de références*

**objet 3**
**système de manutention sans contact 2**

**unité de commande 4**

alimentation du générateur 9
circuit de commande

connexion au dispositif d'aspiration
connexion au capteurs

**dispositif d'aspiration 6**

pompe d'aspiration 6a
vanne de régulation 6b
ligne de connexion 6d
connecteur d'aspiration 6e

joint 35
bec 37

**capteurs 5**

capteur de pression 5a
capteur de flux 5b
capteur de position 5c
capteur de position 5d

**stabilisateur de pression 7**
orifice résistif 7a
**outil de manutention sans contact 8**

transducteur d'ultrasons 10

générateur 12
empilement d'anneaux piézoélectriques 14
orifice central 16 dispositif de transmission 18

organe de précontrainte 20
vis
corps arrière 22
face réflectrice 21
corps frontal 24

partie arrière 24a
interface générateur
bride de fixation 24b
partie de tête 24c
interface tête 26

gorge 33

tête 28

portion terminale 28a
face de saisie 29
coin 29a
interface d'accouplement au corps 28b
ergot 31
prise 39

**canal d'aspiration 30**

section 30a traversant le vis
section 30b traversant le corps frontal
buse(s) d'aspiration 32
rainure 32a

table de placement 11
mécanisme de déplacement de table 13a
mécanisme de déplacement d'outil 13b
premier plan nodal du transducteur P1
deuxième plan nodal du transducteur P2
Axe *A*
Hauteur du transducteur *h*


**Revendications**

1. Outil de manutention (8) pour saisir un objet (3) sans contact, l'outil comprenant un transducteur d'ultrasons (10) configuré pour émettre des ultrasons formant, dans une zone en champ proche de la face de saisie, une onde de surpression, et un système d'aspiration de fluides configuré pour aspirer un fluide vers la face de saisie, formant dans ladite zone en champ proche une sous pression, **caractérisé en ce que** le transducteur d'ultrasons est configuré pour opérer à une fréquence correspondant à la première fréquence harmonique résonante du transducteur ou à la première fréquence harmonique anti-résonante du transducteur.

2. Outil de manutention sans contact selon la revendication 1, **caractérisé en ce que** le transducteur d'ultrasons (10) s'étend entre une face réflective et une face de saisie et a une hauteur (h) définie entre la face de saisie et la face réflective située dans une gamme de 80% à 140% d'une demi-longueur d'onde λ/2 des ultrasons générés dans le transducteur.

3. Outil de manutention sans contact selon la revendication 1 ou 2, **caractérisé en ce que** le système d'aspiration de fluides comprend au moins un canal d'aspiration de fluides (30) disposé dans le transducteur d'ultrasons, le canal d'aspiration comprenant une ou plusieurs buse(s) d'aspiration débouchant sur la face de saisie.

4. Outil de manutention sans contact selon l'une des revendications précédentes **caractérisé en ce que** le transducteur d'ultrasons comprend un générateur d'ultrasons (12) et un dispositif de transmission (18) des ultrasons couplé au générateur, le dispositif de transmission comprenant un corps frontal (24) muni d'un élément de fixation (24b) de l'outil disposé au niveau d'un première plan nodal (P1) des ondes ultrasoniques générées dans le transducteur à une fréquence correspondant à la première fréquence harmonique résonante *f1* du transducteur ou à une fréquence correspondant à la première fréquence harmonique anti-résonante *f1'* du transducteur.

5. Outil de manutention sans contact selon l'une des revendications précédentes **caractérisé en ce que** le transducteur d'ultrasons comprend une tête (28) couplé de manière interchangeable à un corps frontal du dispositif de transmission par un dispositif de fixation, la face de saisie étant disposée sur la tête, un deuxième plan nodal des ondes ultrasoniques générées dans le transducteur à une fréquence correspondant à la première fréquence harmonique résonante *f1* du transducteur ou à une fréquence correspondant à la première fréquence harmonique anti-résonante *f1'* du transducteur.

6. Outil de manutention sans contact selon l'une des revendications précédentes, **caractérisé en ce que** le corps frontal comprend au moins deux réductions de diamètre successives D1, D2, D3 dans le sens du générateur d'ultrasons (12) vers la face de saisie (29), les rapports entre les diamètres successives D1, D2, D3 dans ledit sens se trouvant dans une gamme :

   • pour D1/D2, entre max 2,6 et min 1,1
   • pour D2/D3, entre max 6 et min 1,1

   et pour toute réduction supplémentaire entre max entre max 6 et min 1,1.

7. Outil de manutention sans contact selon l'une des revendications précédentes **caractérisé en ce que** la face de saisie est dans une gamme de 0.01 à 650 mm$^2$ et est plane, ou a une forme courbe, par exemple concave, configurée pour être conforme à une portion de la surface de l'objet à saisir.

8. Système de manutention sans contact comprenant un outil de manutention sans contact selon l'une des revendications précédentes, une unité de commande (4) connectée à un générateur d'ultrasons du transducteur d'ultrasons, et un dispositif d'aspiration (6) comprenant une pompe d'aspiration connectée à un canal d'aspiration de fluides, l'unité de commande et le transducteur d'ultrasons étant configurés pour générer des ultrasons dans le transducteur à une première fréquence harmonique résonante du transducteur ou à une première fréquence harmonique anti-résonante du transducteur.

9. Système de manutention sans contact selon la revendication 8, **caractérisé en ce que** le dispositif d'aspiration comprend une électrovanne (6b) et un capteur de pression (5a) reliés à l'unité de commande (4), l'électrovanne étant régulée par la pression mesurée par le capteur de pression afin de contrôler une distance de suspension ds de l'objet par rapport à la face de saisie.

10. Système de manutention sans contact selon la revendication 8 ou 9, **caractérisé en ce qu'**il comprend un stabilisateur de pression (7) couplé fluidiquement au canal d'aspiration pour limiter un dépassement d'un seuil de sous-pression afin d'éviter une succion trop forte.

11. Système de manutention sans contact selon la revendication précédente, caractérisé en ce le stabilisateur de pression comprend ou est constitué par un orifice résistif (7a) qui est configuré pour fournir une résistance au flux d'air plus grand que le canal d'aspiration (30), notamment une résistance au flux d'air au moins deux fois, de préférence au moins trois fois plus grand, de préférence au moins quatre fois plus grand que la résistance au flux d'air généré par le canal d'aspiration (30) conjointement avec la ou les buse(s) (32).

12. Procédé de manutention d'un objet sans contact, comprenant :

   - fournir un système de manutention sans contact selon l'une des revendications 8 à 11,
   - activer la pompe d'aspiration pour créer une force d'aspiration et le générateur d'ultrasons pour créer une force de répulsion, par rapport à la face de saisie, le générateur d'ultrasons étant commandé par l'unité de commande pour générer des ultrasons dans le transducteur à une première fréquence harmonique résonante du transducteur ou à une première fréquence harmonique anti-résonante,
   - placer la face de saisie de l'outil de manutention en face d'une surface de l'objet à une distance se situant dans une gamme de 0.5 à 6 fois la distance de suspension $d_s$,
   - suspendre l'objet à une distance de suspension non nulle vis-à-vis la face de saisie en contrôlant le dispositif d'aspiration et/ou le générateur d'ultrasons, la distance de suspension étant contrôlée pour être dans une zone de champ proche des ultrasons.

13. Procédé de manutention sans contact selon la revendication 12, **caractérisé en ce que** le dispositif d'aspiration comprend une électrovanne (6b) et un capteur de pression (5a) reliés à l'unité de commande (4), l'électrovanne étant régulée par la pression mesurée par le capteur de pression afin de contrôler une distance de suspension ds de l'objet par rapport à la face de saisie.

14. Procédé de manutention sans contact selon la revendication 12 ou 13, **caractérisé en ce que** le dispositif d'aspiration comprend un stabilisateur de pression (7) couplé fluidiquement au canal d'aspiration, le stabilisateur limitant un dépassement d'un seuil de sous-pression afin d'éviter une succion de matière étrangère provenant de l'objet dans des buses ou dans le canal d'aspiration.

**15.** Procédé de manutention sans contact selon l'une des revendications 12 à 14, **caractérisé en ce que** le dispositif d'aspiration comprend un capteur de flux (5b) mesurant le flux d'air dans le canal d'aspiration reliant l'outil à la pompe d'aspiration pour détecter un contact de l'objet avec la face de saisie, ou pour détecter un flux trop élevé indiquant que l'objet n'est plus en prise avec l'outil.

**Patentansprüche**

**1.** - Handhabungswerkzeug (8) zum berührungslosen Greifen eines Objekts (3), wobei das Werkzeug einen Ultraschallwandler (10), der so konfiguriert ist, dass er Ultraschall aussendet, der in einem Nahfeldbereich der Greiffläche eine Überdruckwelle bildet, und ein Fluidansaugsystem umfasst, das so konfiguriert ist, dass es ein Fluid zur Greiffläche hin ansaugt, in dem Nahfeldbereich eine Unterdruckwelle bildet, **dadurch gekennzeichnet, dass** der Ultraschallwandler so konfiguriert ist, dass er mit einer Frequenz arbeitet, die der ersten resonanten harmonischen Frequenz des Wandlers oder der ersten antiresonanten harmonischen Frequenz des Wandlers entspricht.

**2.** - Berührungsloses Handhabungswerkzeug nach Anspruch 1, **dadurch gekennzeichnet, dass** sich der Ultraschallwandler (10) zwischen einer reflektierenden Fläche und einer Greiffläche erstreckt und eine zwischen der Greiffläche und der reflektierenden Fläche definierte Höhe (h) aufweist, die in einem Bereich von 80% bis 140% einer halben Wellenlänge $\lambda/2$ des in dem Wandler erzeugten Ultraschalls liegt.

**3.** - Berührungsloses Handhabungswerkzeug nach Anspruch 1 oder 2, **dadurch gekennzeichnet, dass** das Flüssigkeitssaugsystem mindestens einen Flüssigkeitssaugkanal (30) umfasst, der im Ultraschallwandler angeordnet ist, wobei der Saugkanal eine oder mehrere Saugdüsen umfasst, die in die Greiffläche münden.

**4.** - Berührungsloses Handhabungswerkzeug nach einem der vorhergehenden Ansprüche, **dadurch gekennzeichnet, dass** der Ultraschallwandler einen Ultraschallgenerator (12) und eine mit dem Generator gekoppelte Übertragungsvorrichtung (18) für den Ultraschall umfasst, wobei die Übertragungsvorrichtung einen Frontkörper (24) umfasst, der mit einem Befestigungselement (24b) für das Werkzeug versehen ist, das auf der Höhe einer ersten Knotenebene (P1) der Ultraschallwellen angeordnet ist, die im Wandler mit einer Frequenz erzeugt werden, die der ersten resonanten harmonischen Frequenz *f1* des Wandlers entspricht, oder mit einer Frequenz, die der ersten antiresonanten harmonischen Frequenz *f1'* des Wandlers entspricht.

**5.** - Berührungsloses Handhabungswerkzeug nach einem der vorhergehenden Ansprüche, **dadurch gekennzeichnet, dass** der Ultraschallwandler einen Kopf (28) umfasst, der durch eine Befestigungsvorrichtung austauschbar mit einem Vorderkörper der Übertragungsvorrichtung gekoppelt ist, wobei die Greiffläche auf dem Kopf angeordnet ist, eine zweite Knotenebene der Ultraschallwellen, die im Wandler bei einer Frequenz erzeugt werden, die der ersten resonanten harmonischen Frequenz *f1* des Wandlers entspricht, oder bei einer Frequenz, die der ersten antiresonanten harmonischen Frequenz *fl'* des Wandlers entspricht.

**6.** - Berührungsloses Handhabungswerkzeug nach einem der vorhergehenden Ansprüche, **dadurch gekennzeichnet, dass** der Frontkörper mindestens zwei aufeinanderfolgende Durchmesserreduzierungen D1, D2, D3 in der Richtung vom Ultraschallgenerator (12) zur Greiffläche (29) aufweist, wobei die Verhältnisse zwischen den aufeinanderfolgenden Durchmessern D1, D2, D3 in dieser Richtung in einem Bereich liegen :

- für D1/D2 zwischen max 2,6 und min 1,1
- für D2/D3 zwischen max 6 und min 1,1

und für jede weitere Reduzierung zwischen max zwischen max 6 und min 1,1.

**7.** - Berührungsloses Handhabungswerkzeug nach einem der vorhergehenden Ansprüche, **dadurch gekennzeichnet, dass** die Greiffläche in einem Bereich von 0,01 bis 650 mm$^2$ liegt und eben ist oder eine gekrümmte, z. B. konkave, Form hat, die so konfiguriert ist, dass sie mit einem Teil der Oberfläche des zu greifenden Objekts übereinstimmt.

**8.** - Berührungsloses Handhabungssystem mit einem berührungslosen Handhabungswerkzeug nach einem der vorhergehenden Ansprüche, einer Steuereinheit (4), die mit einem Ultraschallgenerator des Ultraschallwandlers verbunden ist, und einer Saugvorrichtung (6) mit einer Saugpumpe, die mit einem Fluidansaugkanal verbunden ist, wobei die Steuereinheit und der Ultraschallwandler so konfiguriert sind, dass sie Ultraschall in dem Wandler bei einer ersten resonanten harmonischen Frequenz des Wandlers oder bei einer ersten antiresonanten harmonischen Frequenz des Wandlers erzeugen.

9. - Berührungsloses Handhabungssystem nach Anspruch 8, **dadurch gekennzeichnet, dass** die Saugvorrichtung ein Magnetventil (6b) und einen Drucksensor (5a) umfasst, die mit der Steuereinheit (4) verbunden sind, wobei das Magnetventil durch den vom Drucksensor gemessenen Druck reguliert wird, um einen Aufhängeabstand ds des Objekts von der Greiffläche zu steuern.

10. - Berührungsloses Handhabungssystem nach Anspruch 8 oder 9, **dadurch gekennzeichnet, dass** es einen Druckstabilisator (7) umfasst, der fluidisch mit dem Saugkanal gekoppelt ist, um ein Überschreiten einer Unterdruckschwelle zu begrenzen, um ein zu starkes Saugen zu vermeiden.

11. - Berührungsloses Handhabungssystem nach dem vorhergehenden Anspruch, **dadurch gekennzeichnet, dass** der Druckstabilisator eine Widerstandsöffnung (7a) umfasst oder aus einer solchen besteht, die so konfiguriert ist, dass sie einen Luftstromwiderstand liefert, der größer ist als der Saugkanal (30), insbesondere einen Luftstromwiderstand, der mindestens doppelt so groß, vorzugsweise mindestens dreimal so groß, vorzugsweise mindestens viermal so groß ist wie der Luftstromwiderstand, der durch den Saugkanal (30) zusammen mit der Düse oder den Düsen (32) erzeugt wird.

12. - Verfahren zur berührungslosen Handhabung eines Objekts, umfassend :

- Bereitstellung eines berührungsloses Handhabungssystems nach einem der Ansprüche 8 bis 11 ;
- Aktivierung der Saugpumpe zum Erzeugen einer Saugkraft und des Ultraschallgenerators zum Erzeugen einer Abstoßungskraft in Bezug auf die Greiffläche, wobei der Ultraschallgenerator von der Steuereinheit gesteuert wird, um Ultraschall in dem Wandler bei einer ersten resonanten harmonischen Frequenz des Wandlers oder einer ersten antiresonanten harmonischen Frequenz zu erzeugen ;
- Platzierung der Greiffläche des Handhabungsgeräts in einem Abstand im Bereich des 0,5- bis 6-fachen des Aufhängeabstands ds vor einer Oberfläche des Objekts ;
- Aufhängen des Objekts in einem von Null verschiedenen Aufhängeabstand gegenüber der Greiffläche durch Steuerung der Saugvorrichtung und/oder des Ultraschallgenerators, wobei der Aufhängeabstand so gesteuert wird, dass er sich in einem Nahfeldbereich des Ultraschalls befindet.

13. - Verfahren zur berührungslosen Handhabung nach Anspruch 12, **dadurch gekennzeichnet, dass** die Saugvorrichtung ein Magnetventil (6b) und einen Drucksensor (5a) umfasst, die mit der Steuereinheit (4) verbunden sind, wobei das Magnetventil durch den vom Drucksensor gemessenen Druck reguliert wird, um einen Aufhängeabstand ds des Objekts von der Greiffläche zu steuern.

14. - Verfahren zur berührungslosen Handhabung nach Anspruch 12 oder 13, **dadurch gekennzeichnet, dass** die Saugvorrichtung einen Druckstabilisator (7) umfasst, der fluidisch mit dem Saugkanal gekoppelt ist, wobei der Stabilisator eine Überschreitung einer Unterdruckschwelle begrenzt, um ein Ansaugen von Fremdmaterial aus dem Objekt in Düsen oder in den Saugkanal zu verhindern.

15. - Verfahren zur berührungslosen Handhabung nach einem der Ansprüche 12 bis 14, **dadurch gekennzeichnet, dass** die Saugvorrichtung einen Strömungssensor (5b) umfasst, der die Luftströmung in dem Saugkanal misst, der das Werkzeug mit der Saugpumpe verbindet, um eine Berührung des Objekts mit der Greiffläche zu erfassen oder um eine zu hohe Strömung zu erfassen, die anzeigt, dass das Objekt nicht mehr mit dem Werkzeug in Eingriff ist.

**Claims**

1. - A non-contact handling tool (8) for gripping an object (3), wherein the tool comprises an ultrasonic transducer (10) configured to emit ultrasound forming, in a near-field area of the gripping face, an excess pressure wave, and a fluid suction system configured to suck a fluid towards the gripping face, forming an under pressure in said near-field area, **characterised in that** the ultrasonic transducer is configured to operate at a frequency corresponding to the first resonant harmonic frequency of the transducer or to the first anti-resonant harmonic frequency of the transducer.

2. - The non-contact handling tool according to claim 1, **characterised in that** the ultrasonic transducer (10) extends between a reflective face and a gripping face and has a height (h) defined between the gripping face and the reflective face located in a range from 80% to 140% of a half wavelength $\lambda/2$ of the ultrasound generated in the transducer.

3. - The non-contact handling tool according to claim 1 or 2, **characterised in that** the fluid suction system comprises at least one fluid suction channel (30) arranged in the ultrasonic transducer, the suction channel comprising one or more suction nozzle(s) leading to the gripping face.

4. - The non-contact handling tool according to one of the preceding claims, **characterised in that** the ultrasonic transducer comprises an ultrasonic generator (12) and an ultrasound transmission device (18) coupled to the generator, the transmission device comprising a frontal body (24) provided with a tool attachment element (24b) disposed at a first nodal plane (P1) of the ultrasonic waves generated in the transducer at a frequency corresponding to the first resonant harmonic frequency $f1$ of the transducer or at a frequency corresponding to the first anti-resonant harmonic frequency $f1'$ of the transducer.

5. - The non-contact handling tool according to one of the preceding claims, **characterised in that** the ultrasonic transducer comprises a head (28) interchangeably coupled to a frontal body of the transmission device by an attachment device, the gripping face being arranged on the head, a second nodal plane of the ultrasonic waves generated in the transducer at a frequency corresponding to the first resonant harmonic frequency $f1$ of the transducer or at a frequency corresponding to the first anti-resonant harmonic frequency $f1'$ of the transducer.

6. - The non-contact handling tool according to one of the preceding claims, **characterised in that** the frontal body comprises at least two successive diameter reductions D1, D2, D3 in the direction from the ultrasonic generator (12) towards the gripping face (29), the ratios between the successive diameters D1, D2, D3 in said direction being in a range :

    - for D1/D2, between a maximum of 2.6 and a minimum of 1.1,
    - for D2/D3, between a maximum of 6 and a minimum of 1.1,

and for any additional reduction between a maximum of 6 and a minimum of 1.1.

7. - The non-contact handling tool according to one of the preceding claims, **characterised in that** the gripping face is in a range from 0.01 to 650 $mm^2$ and is flat, or has a curved shape, for example concave, configured to conform to a portion of the surface of the object to be gripped.

8. - A non-contact handling system comprising a non-contact handling tool according to one of the preceding claims, a control unit (4) connected to an ultrasonic generator of the ultrasonic transducer, and a suction device (6) comprising a suction pump connected to a fluid suction channel, wherein the control unit and the ultrasonic transducer are configured to generate ultrasound in the transducer at a first resonant harmonic frequency of the transducer or at a first anti-resonant harmonic frequency of the transducer.

9. - The non-contact handling system according to claim 8, **characterised in that** the suction device comprises a solenoid valve (6b) and a pressure sensor (5a) which are connected to the control unit (4), the solenoid valve being regulated by the pressure measured by the pressure sensor in order to control a suspension distance ds of the object with respect to the gripping face.

10. - The non-contact handling system according to claim 8 or 9, **characterised in that** it comprises a pressure stabiliser (7) fluidically coupled to the suction channel to limit the exceeding of an under pressure threshold in order to avoid a too large suction.

11. - The non-contact handling system according to the preceding claim, **characterised in that** the pressure stabiliser comprises or consists of a resistive orifice (7a) which is configured to provide a resistance to air flow greater than the suction channel (30), in particular a resistance to air flow at least twice, preferably at least three times greater, preferably at least four times greater than the resistance to air flow generated by the suction channel (30) together with the nozzle(s) (32).

12. - A non-contact object handling method, comprising :

    - providing a non-contact handling system according to one of claims 8 to 11,
    - activating the suction pump to create a suction force and the ultrasonic generator to create a repulsive force, relative to the gripping face, the ultrasonic generator being controlled by the control unit to generate ultrasound in the transducer at a first resonant harmonic frequency of the transducer or at a first anti-resonant harmonic frequency,
- placing the gripping face of the handling tool opposite a surface of the object at a distance locating in a range from 0.5 to 6 times the suspension distance ds,
- suspending the object at a non-zero suspension distance from the gripping face by controlling the suction device and/or the ultrasonic generator, the suspension distance being controlled so as to be in a near-field area of the ultrasound.

13. - The non-contact handling method according to claim 12, **characterised in that** the suction device comprises a solenoid valve (6b) and a pressure sensor (5a) which are connected to the control unit (4), the solenoid valve being regulated by the pressure measured by the pressure sensor in order to control a suspension distance *ds* of the object with respect to the gripping face.

14. - The non-contact handling method according to claim 12 or 13, **characterised in that** the suction device comprises a pressure stabiliser (7) fluidically coupled to the suction channel, the stabiliser limiting the exceeding of an under pressure threshold in order to prevent a suction of foreign matter from the object into nozzles or into the suction channel.

15. - The non-contact handling method according to one of claims 12 to 14, **characterised in that** the suction device comprises a flow sensor (5b) measuring the air flow in the suction channel connecting the tool to the suction pump in order to detect a contact of the object with the gripping face, or to detect a too large flow indicating that the object is no longer engaged with the tool.

Fig 1a

Fig 1b

6a

Pompe d'aspiration

Vanne de régulation

6b

5a

Capteur de
pression

7

7a

6d

Capteur de flux

5b

8

## Fig 2a

## Fig 11a

Fig 2b

Fig 2d

Fig 2c

Fig 3a

Fig 3b

Fig 3c

Fig 3d

Fig 5a

28

28a

29

Fig 5b

28a

32

29

Fig 7a

28

29

32a

Fig 7b

32a

32

Fig 6

28

32

29

32

Fig 4

29

32

28

28a

39

Fig 9a

28

28a

29

29a

32

Fig 9b

29a

Fig 8b

30

28

28a

32

2a

Fig 8a

28

28a

2a

28

28

3

3

**Fig 10**

28

F

**Fig 11c**

Zone de Fresnel

D

λ/2

λ/2

1

2

Fig 11b

EP 3 802 018 B1

Fig. 12a

### Hauteur (h) VS Fréquence

Fig. 12b

Fig 13

Fig 14

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040070221 A
- DE 102008036805

- JP 2006073654 A

**Littérature non-brevet citée dans la description**

- Non-contact Handling and Transportation for Substrates and Microassembly Using Ultrasound-Air-Film-Technology. *IEEE 2011*